# FASCICULE DE BREVET EUROPEEN

(11) **EP 3 229 383 B1**
(45) Date de publication et mention de la délivrance du brevet: **24.02.2021**
(21) Numéro de dépôt: 17158840.3
(22) Date de dépôt: 02.03.2017
(51) Int. Cl.: H04B 7/185, G01S 19/23

(54) **SYSTÈME ET PROCÈDÈ DE CALIBRATION DYNAMIQUE D'UNE OU PLUSIEURS CHAINES RADIOFRÉQUENCE DE TRANSMISSION D'UNE CHARGE UTILE DE SATELLITE**
EIN DYNAMISCHES KALIBRIERUNGSSYSTEM UND EINE DYNAMISCHE KALIBRIERUNGSMETHODE IN EINER SATELLITENLADNUNG.
A DYNAMIC CALIBRATION SYSTEM AND METHOD WITHIN A SATELLITE PAYLOAD.

(30) Priorité: 04.04.2016 FR 1600565
(43) Date de publication de la demande: 11.10.2017
(73) Titulaire: Thales, 92400 Courbevoie (FR)
(72) Inventeur: OSTER, Yann Nicolas Pierre, 31100 TOULOUSE (FR); LECOINTRE, Aubin Michel, 31100 TOULOUSE (FR)
(74) Mandataire: Marks & Clerk France

(56) Documents cités:
- US-A1- 2010 164 782
- Aubin Lecointre: "Payload On-Board self calibration techniques", ESA's ARTES Programmes, 17 février 2014 (2014-02-17), XP055329026, ESA's ARTES Programmes Extrait de l'Internet: URL:https://artes.esa.int/projects/payload -board-self-calibration-techniques [extrait le 2016-12-14]

## Description

La présente invention concerne un système et un procédé de calibration dynamique d'une ou plusieurs chaines radiofréquence RF de transmission d'une charge utile de satellite pour lesquels ladite calibration dynamique de la chaîne radiofréquence est mise en oeuvre sans interrompre la transmission du signal utile traversant la chaîne RF, et pour lesquels la forme d'onde du signal utile compensé, obtenu en sortie de la chaine RF pendant et après calibration, est peu dégradée.

De manière générale, les performances d'un circuit radioélectrique formant au moins une chaîne radiofréquence RF de fonctions analogiques mises en série suivant différentes combinaisons, comme par exemple une amplification RF, une transposition de fréquences, un filtrage, sont affectées par des écarts imprévisibles et variables résultant par exemple de la fabrication, de la sensibilité à la température de l'environnement, du vieillissement des composants et de leur exposition à des radiations ionisantes.

De manière particulière, les performances des circuits des charges utiles de télécommunications à bord des satellites subissent de tels effets imprévisibles.

Ainsi, pour une charge utile de télécommunications classique comportant un petit nombre de chaînes radiofréquences RF et des antennes à source unique par faisceau SFPB (en anglais « Single Feed Per Beam »), une exigence est posée typiquement d'estimer et de compenser la réponse spectrale des chaînes, afin d'égaliser le gain et le temps de propagation de groupe sur la bande utile.

S'agissant d'une charge utile de télécommunications mettant en oeuvre une antenne active et un grand nombre de chaînes radiofréquences ou voies RF associées, l'exigence est posée non seulement d'une égalisation pour chaque voie de la réponse spectrale sur la bande utile, mais aussi d'une égalisation des dispersions en phase et amplitude entre les voies sur la bande utile. En effet, les performances radioélectriques des antennes actives sont particulièrement sensibles aux déphasages entre voies, et l'exigence fixée à la tolérance de tels déphasages est particulièrement sévère, en particulier pour implanter une fonction d'anti-brouillage.

Afin de maîtriser les dispersions en amplitude et phase par voie ou entre voies, une première famille de solutions classiques dites statiques a été mise en œuvre et est encore utilisée de nos jours, en particulier dans le domaine spatial.

Une première solution statique de ladite première famille consiste à sur-contraindre les exigences de spécification des performances techniques de chaque composant ou équipement de la chaîne radiofréquence, de sorte que la somme des dispersions en gain et phase sur la bande utile, causées par l'ensemble des composants de la chaine radiofréquence, reste compatible du niveau de performance souhaité, pour la durée de vie prévue.

Cette première technique classique qui sur-contraint la conception, la fabrication, l'approvisionnement, et le réglage en phase d'intégration des composants de la ou des chaines, correspond à une approche conservative. Cette approche a pour effet d'augmenter significativement les coûts de fabrication. Par ailleurs, les dispersions résiduelles n'étant pas compensées dynamiquement, les dispersions restent non négligeables et certaines fonctions comme l'anti-brouillage ne peuvent pas toujours être réalisées.

Une seconde solution statique de ladite première famille consiste à caractériser le comportement des éléments ou équipements, en termes de sensibilité à la température et/ou à la tension d'alimentation, puis à implanter une fonction de compensation statique, utilisant la mesure de température et/ou tension d'alimentation, et réglée en phase AIT (en anglais Assembly, Integration and Test), spécifiquement pour chaque instance. Ce type de solution permet une correction statique mais ne permet pas une capacité d'adaptation aux écarts réels qui peuvent se creuser, en particulier du fait du vieillissement et de l'effet des radiations subies par les composants de la chaîne radiofréquence en orbite.

Afin de remédier aux inconvénients présentés par les première et deuxième solutions statiques de la première famille de solutions, une deuxième famille de solutions dites dynamiques est décrite dans l'article de A. Lecointre et al., intitulé «On-Board Self Calibration Techniques » et publié au Workshop ESA du 17-19 avril 2012 : « ESA workshop on advanced flexible telecom payloads ». Ce document passe en revue les techniques de calibration dynamiques utilisées à ce jour ou en cours de développement, et évalue l'effet du signal de calibration sur le service nominal ou le signal de communication en fonction de la technique de calibration utilisée.

Chaque solution dynamique, décrite dans l'article de A. Lecointre et al., consiste à estimer les écarts en amplitude et/ou en phase sur la ou les chaînes radiofréquences, en utilisant un signal de calibration connu, injecté en entrée et extrait en sortie de la chaîne radiofréquence. La déformation du signal de calibration en sortie de la chaîne radiofréquence permet d'estimer la réponse spectrale en temps réel, et de compenser les défauts de la réponse moyennant une boucle de rétroaction. Ce type de solution bouclée, dynamique, permet de s'adapter avantageusement aux défauts, indépendamment de leur origine et d'une variabilité non prédictible de leur survenue, comme un défaut causé par le vieillissement et/ou les radiations.

Afin de pouvoir injecter et extraire le signal de mesure servant à la calibration, une première solution dynamique de ladite deuxième famille consiste à suspendre le service utile de télécommunication pendant une période de temps avec l'inconvénient de dégrader la qualité du service.

Une deuxième solution dynamique de ladite deuxième famille consiste à étaler le spectre du signal de calibration afin de pouvoir le superposer au signal utile de trafic sans trop perturber ledit signal utile, et éviter ainsi l'interruption du service de télécommunication. Toutefois, dans ce cas la mesure de calibration est affectée par un faible rapport du niveau du signal de calibration mesuré sur le niveau de bruit et interférence SNIR_{cal} (en anglais « calibration Signal to Noise and Interference Ratio ») et l'étalement du point mesuré en fréquence, l'estimation des défauts correspondant à une moyenne des défauts sur la bande étalée.

Une troisième solution dynamique de ladite deuxième famille consiste à injecter le signal de calibration sur des fréquences non utilisées par les services de communication sur des bandes de garde avec l'inconvénient d'une mauvaise granularité des fréquences utilisées pour l'estimation de la dispersion en amplitudes et/ou en phases sur la bande de la chaîne à calibrer.

La demande de brevet US 2010/0164782 A1 décrit également une solution de ladite deuxième famille.

Un premier problème technique est d'améliorer la qualité de correction ou de compensation de la réponse d'une chaine radiofréquence sur la bande utile de la chaîne radiofréquence, qui est obtenue par une correction ou une compensation réalisée par un procédé et un système de calibration dynamique utilisant les techniques décrites ci-dessus.

Un deuxième problème technique est de limiter le niveau d'interférence subi par le signal de calibration et ayant pour source le signal utile de communication lorsque le procédé de compensation est mis en œuvre sans interruption du service utile de communication.

Un troisième problème technique est de minimiser la distorsion causée par le signal de calibration sur le signal utile de communication en sortie de la chaîne sous calibration lorsque la calibration est active.

A cet effet, l'invention a pour objet un système de calibration dynamique d'un circuit radiofréquence d'une charge utile de satellite, défini selon la revendication 1.

Suivant des modes particuliers de réalisation, le système de calibration dynamique comprend l'une ou plusieurs des caractéristiques suivantes :
- le soustracteur analogique ou numérique est connecté en aval de la première chaîne radiofréquence à calibrer et en aval du filtre de compensation, ou le soustracteur numérique est connecté entre en amont la première chaîne radiofréquence à calibrer et en aval le filtre de compensation ;
.- le système de calibration dynamique comporte en outre un premier générateur d'un ou plusieurs signaux d'oscillateur local OL identiques à un déphasage près et synchronisés sur une première horloge de référence ; et lorsque la première chaine radiofréquence à calibrer comporte un ou plusieurs circuits de transposition de fréquences ; et/ou lorsque la deuxième chaine d'injection est analogique et comporte un ou plusieurs circuits de transposition de fréquences ; et/ou lorsque la troisième chaine de fourniture de la réplique adaptée est analogique et comporte un ou plusieurs circuits de transposition de fréquence, le ou les premiers circuits de transposition, et/ou le ou les deuxièmes circuits de transposition, et/ou le ou les troisièmes circuits de transposition sont configurés pour utiliser le même signal OL d'oscillateur local à un déphasage près et réaliser les transpositions de fréquences montantes ou descendantes ;
.- lorsque l'injection du signal de calibration est numérique, le dispositif d'injection du signal de calibration comporte un générateur numérique d'un signal de calibration de référence numérique et un sommateur numérique du signal de calibration de référence à un signal de trafic numérique ; et lorsque l'injection du signal de calibration est analogique, le dispositif d'injection du signal de calibration comporte un générateur numérique d'un signal de calibration de référence numérique, un convertisseur numérique-analogique, et une deuxième chaine d'injection analogique incluant un coupleur analogique fonctionnant en sommateur de deux signaux analogiques ; et le dispositif d'injection du signal de calibration est configuré pour ajuster la puissance du deuxième signal de calibration dynamiquement relativement à celle du troisième signal utile au niveau le plus élevé possible compatible d'une absence de saturation d'un convertisseur analogique-numérique ou numérique-analogique de la première chaîne radiofréquence à calibrer, disposé respectivement en sortie ou en entrée de ladite première chaîne ;
.- la première chaine radiofréquence à calibrer est une chaine analogique d'un récepteur de communication comportant un premier circuit de transposition abaisseur de fréquences, un premier étage amont d'amplification disposé en amont du premier circuit de transposition, un premier étage aval d'amplification disposé en aval du premier circuit de transposition, et un premier convertisseur analogique-numérique de sortie, connecté en sortie de la première chaine à calibrer ; et le dispositif d'injection du signal de calibration comporte, mis en série, un générateur numérique d'un signal de calibration de référence numérique, un convertisseur numérique-analogique, et une deuxième chaine d'injection analogique incluant un coupleur analogique fonctionnant en sommateur de deux signaux analogiques ; et le dispositif d'injection est configuré pour injecter un ou plusieurs signaux de calibration d'une séquence temporelle couvrant la bande utile de fréquences sur laquelle la première chaîne est à calibrer, et additionner le ou les signaux de calibration au troisième signal utile de trafic ; et le dispositif d'effacement temporel comporte le générateur numérique du signal de calibration de référence numérique en partage avec le dispositif d'injection, un soustracteur numérique, et une troisième chaine numérique de fourniture d'une réplique du signal de calibration de référence à soustraire, adaptée en termes d'une fréquence de transposition compatible de la fréquence de sortie de la chaine radiofréquence à calibrer et d'un retard compatible des temps de propagation du signal le long du chemin de propagation traversant successivement le dispositif d'injection, la première chaine radiofréquence à calibrer et le filtre de compensation ;
.- le dispositif de compensation de la réponse fréquentielle et temporelle de la première chaine radiofréquence à calibrer, comporte un filtre de compensation et un optimiseur adaptatif ou en bloc des coefficients du filtre de compensation, le filtre de compensation étant disposé directement en aval de la première chaine radiofréquence à calibrer et directement en amont du soustracteur numérique du dispositif d'effacement temporel, et l'optimiseur adaptatif est configuré pour déterminer des commandes des coefficients du filtre de compensation à partir de mesures d'un quatrième signal observé, prises directement en aval du soustracteur numérique, et à partir du signal de calibration de référence issu du générateur de référence ;
.- la première chaine radiofréquence à calibrer est une chaine analogique d'un récepteur de communication comportant un premier circuit de transposition abaisseur de fréquences, un premier étage amont d'amplification disposé en amont du premier circuit de transposition, un premier étage aval d'amplification disposé en aval du premier circuit de transposition, et un premier convertisseur analogique-numérique de sortie, connecté en sortie de la première chaine à calibrer ; et le dispositif d'injection du signal de calibration comporte, mis en série, le générateur numérique d'un signal de calibration de référence numérique, le convertisseur numérique-analogique, et une deuxième chaine d'injection analogique incluant un coupleur analogique fonctionnant en sommateur de deux signaux analogiques ; et le dispositif d'injection est configuré pour injecter un ou plusieurs signaux de calibration d'une séquence temporelle couvrant la bande utile de fréquences sur laquelle la première chaîne est calibrée, et additionner le ou les signaux de calibration au troisième signal utile de trafic ; et le dispositif d'effacement temporel comporte le générateur numérique des signaux de calibration de référence numériques de la séquence temporelle en partage avec le dispositif d'injection, le soustracteur numérique, et une troisième chaine numérique de fourniture des répliques des signaux de calibration de référence de la séquence à soustraire, adaptée en termes d'une fréquence de transposition compatible de la fréquence de sortie de la chaine radiofréquence à calibrer, de gains et de retards compatibles respectivement des gains et des temps de propagation des signaux de calibration le long du chemin de propagation traversant successivement le dispositif d'injection et la première chaine radiofréquence à calibrer ;
.- la troisième chaine numérique comporte le contrôleur de calibration, configuré pour estimer paramètres caractéristiques des signaux de calibration de la séquence temporelle à partir du quatrième signal courant observé, et configuré pour déterminer des paramètres caractéristiques de répliques adaptées aux signaux de calibration de la séquence à partir des signaux de calibration de la séquence générés par le générateur de signal de calibration de référence et des paramètres caractéristiques estimés ; et un générateur numérique des répliques adaptées aux signaux de calibration observés et à soustraire ;
.- le dispositif de compensation de la réponse fréquentielle et temporelle de la première chaine radiofréquence à calibrer, comporte un filtre de compensation et un circuit de contrôle des coefficients du filtre de compensation, le filtre de compensation étant connecté directement en aval du soustracteur numérique, ledit soustracteur étant disposé directement en aval de la première chaine radiofréquence à calibrer ; et le circuit de contrôle étant configuré pour déterminer des commandes des coefficients du filtre de compensation à partir de plusieurs mesures d'un quatrième signal observé prises directement en aval de la première chaine à calibrer et à partir du signal de calibration de référence issu du générateur de référence ;
.- la première chaine radiofréquence à calibrer est une chaine analogique d'un émetteur de communication comportant un premier circuit de transposition élévateur de fréquences, un premier étage amont d'amplification disposé en amont du premier circuit de transposition, un premier étage aval d'amplification disposé en aval du premier circuit de transposition, et un premier convertisseur numérique-analogique d'entrée, connecté en sortie du filtre de compensation; le dispositif d'injection du signal de calibration comporte, mis en série, un générateur numérique d'un signal de calibration de référence numérique, et une deuxième chaine d'injection numérique comportant un sommateur numérique de deux signaux numériques ; et le dispositif d'effacement temporel comporte le générateur numérique du signal de calibration de référence numérique en partage avec le dispositif d'injection, le soustracteur analogique, et une troisième chaine hybride numérique-analogique de fourniture d'une réplique du signal de calibration de référence à soustraire, adaptée en termes d'une fréquence de transposition compatible de la fréquence de sortie de la première chaine radiofréquence à calibrer et d'un retard compatible des temps de propagation du signal le long du chemin de propagation traversant successivement le dispositif d'injection, le filtre de compensation et la première chaine radiofréquence à calibrer ;
.- la troisième chaine hybride comporte mise en série une troisième sous-chaine numérique et une troisième sous-chaine analogique, la troisième sous-chaine numérique incluant en série : un circuit numérique de reproduction d'un modèle de référence numérique d'une réponse temporelle et fréquentielle de la première chaîne radiofréquence et du filtre de compensation de la première chaine lorsque la compensation effectuée par le filtre de compensation est optimale, et de correction des dispersions en amplitude et en phase causés par la troisième sous-chaine analogique, et un troisième convertisseur numérique-analogique; et la troisième sous-chaine analogique incluant un troisième circuit de transposition élévateur de fréquences, un troisième étage amont d'amplification disposé en amont du troisième circuit de transposition, un troisième étage aval d'amplification de puissance disposé en aval du troisième circuit de transposition ;
.- le dispositif de compensation de la réponse fréquentielle et temporelle de la première chaine radiofréquence à calibrer, comporte un filtre de compensation numérique et un optimiseur adaptatif ou en bloc des coefficients du filtre de compensation numérique, le filtre de compensation étant disposé directement en amont de la première chaine radiofréquence à calibrer, et directement en aval du sommateur numérique, et l'optimiseur adaptatif est configuré pour déterminer des commandes des coefficients du filtre de compensation à partir de mesures d'un quatrième signal observé, prises directement en aval du soustracteur analogique et à partir du signal de calibration de référence issu du générateur de référence ;
.- le dispositif de compensation comporte en outre une quatrième chaine de mesure d'acheminement de mesures du quatrième signal observé prises directement en aval du soustracteur analogique à l'optimiseur adaptatif, la quatrième chaine de mesure incluant un quatrième circuit de transposition abaisseur de fréquences, un quatrième étage amont d'amplification disposé en amont du quatrième circuit de transposition abaisseur, un quatrième étage aval d'amplification disposé en aval du quatrième circuit de transposition ;
.- le système de calibration dynamique comporte en outre un deuxième générateur d'un ou plusieurs signaux d'horloge d'échantillonnage, dérivés d'un signal d'horloge de référence commun fourni par une deuxième horloge de référence ; et lorsque la première chaine radiofréquence à calibrer comporte un convertisseur analogique-numérique ADC et/ou un convertisseur digital-analogique DAC, et/ou lorsque la deuxième chaine d'injection est analogique et comporte un convertisseur numérique - analogique DAC ; et/ou lorsque la troisième chaine de fourniture de la réplique adaptée est analogique et comporte un convertisseur numérique-analogique DAC ; et/ou lorsque la quatrième chaîne de mesure est analogique et comporte un convertisseur analogique-numérique ADC ; et/ou le(s) convertisseur(s) numérique-analogique, et/ou le(s) convertisseur(s) numérique-analogique sont synchronisés entre eux au travers de l'horloge locale ou de l'oscillateur local, partagé et considéré comme maître, tous les convertisseurs analogique-numériques ADC et numérique-analogiques DAC sont configurés pour utiliser le ou les signaux d'horloge d'échantillonnage, dérivés du signal d'horloge de référence commun fourni par la deuxième horloge de référence.

L'invention a également pour objet un procédé de calibration dynamique d'un circuit radiofréquence d'une charge utile de satellite, le circuit radiofréquence comprenant une première chaine radiofréquence à calibrer d'amplification et de filtrage avec ou sans transposition à une fréquence de transposition prédéterminée d'un premier signal d'entrée formé par la somme temporelle d'un deuxième signal de calibration et d'un troisième signal utile d'entrée, la première chaine radiofréquence à calibrer sur une bande utile de chaîne étant comprise entre en amont un premier port amont de réception du premier signal d'entrée et en aval un premier port aval de fourniture d'un premier signal de sortie, le premier signal de sortie étant la réponse fréquentielle et temporelle de la première chaine radiofréquence à calibrer au premier signal d'entrée; le procédé de calibration dynamique comprenant les étapes consistant en ce que :
.- dans une première étape, un dispositif d'injection injecte le deuxième signal de calibration dont la forme d'onde est prédéterminée en amont de la première chaine radiofréquence à calibrer, le deuxième signal de calibration étant injecté directement sous forme numérique ou indirectement sous forme analogique au travers d'une deuxième chaine d'injection analogique à partir d'un signal de calibration de référence ; puis
.- dans une deuxième étape, un dispositif de compensation compense, sur la bande utile de fréquences de la première chaîne à calibrer, des disparités en amplitude et en phase causées par la première chaine à calibrer, à l'aide d'un filtre de compensation, disposé en amont ou en aval de la première chaine radiofréquence à calibrer, la compensation étant réalisée à partir de mesures d'un quatrième signal, observé en aval de la première chaine radiofréquence à calibrer et du filtre de compensation, ou directement en aval de la première chaine à calibrer ; et le procédé de calibration dynamique étant caractérisé en ce qu'il comprend une troisième étape, exécutée après la première étape, au cours de laquelle un dispositif d'effacement temporel efface temporellement le signal de calibration injecté à l'aide d'un soustracteur analogique ou numérique, connecté en aval de la première chaîne à calibrer.

Suivant des modes particuliers de réalisation, le procédé de calibration comprend l'une ou plusieurs des caractéristiques suivantes :
.- la troisième étape est exécutée après la deuxième étape, le soustracteur est un soustracteur analogique, connecté directement en aval de la première chaîne à calibrer, et le filtre de compensation est un filtre de compensation numérique disposé en amont de la chaine radiofréquence à calibrer, lorsque la première chaine est la chaine d'un émetteur ; ou la troisième étape est exécutée après la deuxième étape, le soustracteur est un soustracteur numérique, connecté directement en aval du filtre de compensation, et le filtre de compensation est un filtre de compensation numérique, disposé directement en aval de la première chaine à calibrer, lorsque la première chaine à calibrer est la chaine d'un récepteur ; ou la troisième étape est exécutée avant la deuxième étape, le soustracteur est un soustracteur numérique connecté directement entre en amont la première chaine à calibrer et en aval le filtre de compensation, et le filtre de compensation est un filtre de compensation numérique, disposé directement en aval du soustracteur numérique, lorsque la première chaine à calibrer est la chaine d'un récepteur.

L'invention propose une solution au problème de la calibration dynamique de chaînes de traitement en réception et en émission incluant des fonctions analogiques, sources de dispersion de la réponse fréquentielle.

Contrairement aux méthodes connues, cette solution permet d'appliquer un signal de mesure de forte amplitude en bande étroite ou en large bande, sans étalement de spectre supplémentaire, et sans impact significatif sur la qualité du signal utile (le signal de trafic dans le cas d'une charge utile de télécommunications) transmis en sortie de la chaine en termes d'absence d'interruption de service et d'absence d'interférence.

Cette solution concilie performance de calibration grâce à une mesure du signal de calibration à SNR élevé (en anglais « Signal to Noise Ratio ») et transparence pour le service utile de télécommunications en termes d'absence d'interruption de service et d'absence d'interférence vis à vis du signal utile.

Le besoin en calibration concerne particulièrement les charges utiles de télécommunications embarquées à bord des satellites, qui sont confrontées à des variations cycliques de température, d'alimentation, ainsi qu'à l'effet des radiations et au vieillissement sur des durées de vies pouvant excéder quinze ans.

L'invention sera mieux comprise à la lecture de la description de plusieurs formes de réalisation qui va suivre, donnée uniquement à titre d'exemple et faite en se référant aux dessins sur lesquels :
- la Figure 1 est une vue d'un premier mode de réalisation selon l'invention d'un système de calibration dynamique d'une chaine radiofréquence de transmission d'une charge utile de satellite dans le cas où la chaine est celle d'un circuit récepteur ;
- la Figure 2 est un ordinogramme d'un premier mode de réalisation selon l'invention d'un procédé de calibration dynamique d'une chaine radiofréquence de transmission d'une charge utile de satellite, correspondant à la mise en œuvre du système de calibration dynamique de la Figure 1 ;
- la Figure 3 est une vue d'un deuxième mode de réalisation selon l'invention d'un système de calibration dynamique d'une chaine radiofréquence de transmission d'une charge utile de satellite dans le cas où la chaine est celle d'un circuit récepteur ;
- la Figure 4 est un ordinogramme d'un deuxième mode de réalisation selon l'invention d'un procédé de calibration dynamique d'une chaine radiofréquence de transmission d'une charge utile de satellite, correspondant à la mise en œuvre du système de calibration dynamique de la Figure 3 ;
- la Figure 5 est une vue d'un troisième mode de réalisation selon l'invention d'un système de calibration dynamique d'une chaine radiofréquence de transmission d'une charge utile de satellite dans le cas où la chaine est celle d'un circuit émetteur ;
- la Figure 6 est un ordinogramme d'un troisième mode de réalisation selon l'invention d'un procédé de calibration dynamique d'une chaine radiofréquence de transmission d'une charge utile de satellite, correspondant à la mise en œuvre du système de calibration dynamique de la Figure 5;
- la Figure 7 est une vue d'un quatrième mode de réalisation selon l'invention d'un système de calibration dynamique d'un ensemble de N chaînes radiofréquences d'émission d'une charge utile de satellite ;
- les Figures 8A et 8B sont des ordinogrammes d'un procédé général de calibration dynamique d'une chaine radiofréquence d'une charge utile de satellite englobant les procédés de calibration dynamique des Figures 2, 4 et 6.

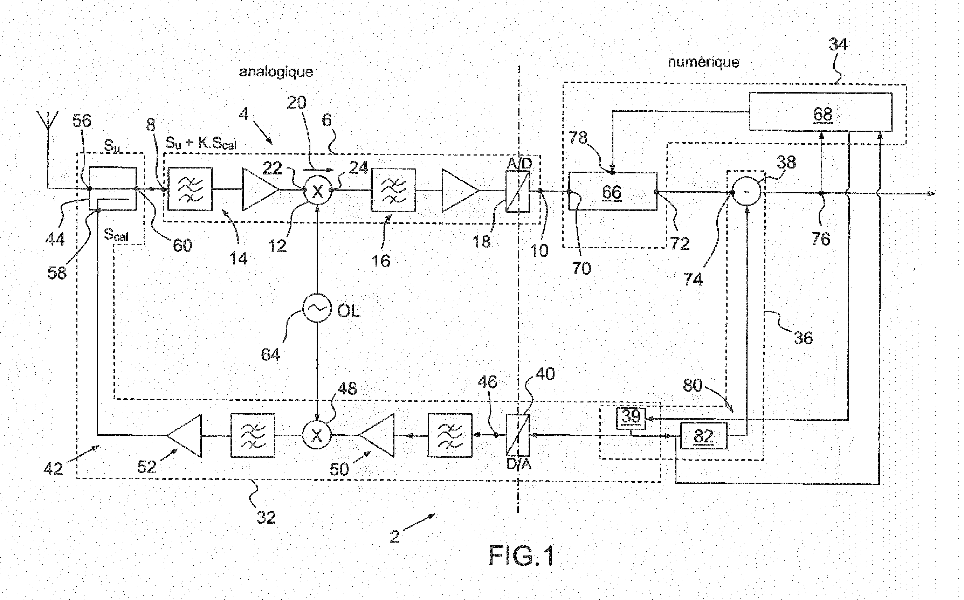

Suivant la Figure 1 et un premier mode de réalisation, un système de calibration dynamique 2 d'un circuit radiofréquence RF 4 d'une charge utile de satellite est représenté.

Le circuit radiofréquence RF 4 à calibrer comprend une première chaine radiofréquence RF analogique 6 de transmission à calibrer sur une bande utile de chaine, la première chaîne radiofréquence analogique 6 étant comprise entre, en amont, un premier port amont 8 de réception d'un premier signal radiofréquence d'entrée et, en aval, un premier port aval 10 de fourniture d'un premier signal de sortie.

Le premier signal numérique de sortie est la réponse fréquentielle et temporelle de la première chaîne analogique 6 à calibrer au premier signal radiofréquence d'entrée.

La première chaine radiofréquence analogique 6 à calibrer est ici une chaine analogique d'un récepteur de communication qui comporte un premier circuit de transposition abaisseur de fréquences 12, un premier étage amont d'amplification 14, disposé en amont du premier circuit de transposition 12, un premier étage aval d'amplification 16, disposé en aval du premier circuit de transposition 12, et un premier convertisseur analogique-numérique ADC (en anglais Analog to Digital Converter) de sortie 18 dont la sortie numérique est connectée au premier port aval 10 de la première chaine radiofréquence 6 analogique à calibrer. Le sens de l'amont vers l'aval de la première chaine 6 est représenté par une flèche 20, orientée depuis le port d'entrée RF 22 vers le port de sortie RF 24 du circuit de transposition abaisseur de fréquences 12.

De manière générale, la première chaine radiofréquence à calibrer peut contenir un nombre quelconque d'amplificateurs, supérieur ou égal à un, et non limité nécessairement à deux amplificateurs.

En variante, la première chaine radiofréquence à calibrer peut être dépourvue de transposition de fréquence par mélangeur et oscillateur local.

Le système de calibration automatique 2 comprend :
.- un dispositif d'injection 32 d'un deuxième signal de calibration dont la forme d'onde est prédéterminée, disposé en entrée et en amont de la première chaine radiofréquence analogique 6 à calibrer, et
.- un dispositif de compensation 34 de la réponse fréquentielle et temporelle de la première chaine radiofréquence 6 à calibrer sur la bande utile de la première chaîne 6, et
.- un dispositif d'effacement temporel 36 du deuxième signal de calibration injecté ayant un soustracteur numérique 38.

Le dispositif d'injection 32 du deuxième signal de calibration comporte, mis en série et successivement, un générateur numérique 39 d'un deuxième signal de calibration de référence numérique, un deuxième convertisseur numérique-analogique 40 DAC (en anglais Digital to Analog Converter), et une deuxième chaîne 42, ici d'injection analogique.

La deuxième chaîne d'injection analogique 42 inclut en extrémité de sortie un coupleur analogique 44, configuré pour fonctionner comme un sommateur ou additionneur analogique de deux signaux analogiques, les deux signaux analogiques étant formés par un troisième signal utile d'entrée et le deuxième signal de calibration injecté.

Le deuxième signal de calibration a une largeur de bande utile inférieure ou égale à la largeur de bande utile de la première chaîne à calibrer.

La deuxième chaine 42, ici d'injection analogique, comporte un port d'entrée 46, connecté à la sortie analogique du deuxième convertisseur numérique-analogique DAC 40.

La deuxième chaine d'injection analogique 42 comporte ici un deuxième circuit de transposition élévateur de fréquences 48, un deuxième étage amont d'amplification 50, disposé en amont du deuxième circuit de transposition 48, un deuxième étage aval d'amplification 52, disposé en aval du deuxième circuit de transposition 48.

Le dispositif d'injection 32 est ici configuré pour injecter, en le port d'entrée amont 8 de la première chaine analogique 6 à calibrer, le deuxième signal de calibration qui a la même forme d'onde, à une transposition de fréquence près, que le signal de calibration numérique de référence, généré par le générateur de référence 39.

L'injection du deuxième signal de calibration a lieu au travers du coupleur analogique 44 qui comporte un premier port d'entrée d'injection 56, connecté en sortie d'une source d'antenne, un deuxième port d'entrée d'injection 58, connecté en aval de et à la sortie radiofréquence analogique de la deuxième chaine analogique 42, et un troisième port de sortie d'injection 60, connecté au port d'entrée amont 8 de la première chaine analogique 6 à calibrer.

Le premier port d'entrée d'injection 56 est configuré pour recevoir le troisième signal utile d'entrée, par exemple un signal de trafic de communication, désigné par Sᵤ(t), tandis que le deuxième port d'entrée d'injection 58 est configuré pour recevoir le deuxième signal de calibration, désigné par S_{Cal}(t) et fourni en sortie de la deuxième chaine d'injection analogique 42.

Le troisième port de sortie d'injection 60 est configuré pour fournir en entrée 8 de la première chaine 6 à calibrer le premier signal d'entrée Sᵤ(t)+ K.S_{Cal}(t), égal à la somme temporelle du signal de trafic Sᵤ(t) et du signal de calibration couplé K.S_{Cal}(t), K désignant un facteur de couplage du coupleur sommateur 44.

Le dispositif d'injection 32 est configuré pour injecter le deuxième signal de calibration a fort niveau, pour permettre d'optimiser la précision de l'estimation de la réponse spectrale et temporelle de la première chaîne à calibrer, et pour permettre d'optimiser la compensation de la chaîne à calibrer.

En pratique, la puissance du deuxième signal de calibration est ajustée dynamiquement relativement à celle du signal utile afin de ne pas saturer le premier convertisseur analogique-numérique ADC de sortie 18. Le réglage est par exemple réalisé au niveau de la génération numérique 39 du signal, la deuxième chaîne analogique 42 ayant un gain constant.

Ici, la fréquence du signal de transposition du premier circuit abaisseur et la fréquence du deuxième circuit élévateur sont identiques et le signal de transposition est fourni par un même oscillateur local 64, asservi sur une horloge maîtresse de référence, non représentée sur la Figure 1. De même les horloges d'échantillonnage du convertisseur analogique-numérique de sortie 18 de la première chaine 6, du convertisseur numérique analogique d'entrée 40 de la deuxième chaine analogique 42, et du générateur numérique 39 du signal de calibration de référence sont synchronisées ici de manière préférée sur l'horloge maîtresse de référence.

De manière générale, tous les mélangeurs des différentes chaînes utilisent un même signal OL d'oscillateur local, à un déphasage près, pour réaliser les transpositions de fréquences montantes ou descendantes.

De manière générale, tous les convertisseurs analogique-numérique ADC et numérique-analogique DAC utilisent un ou plusieurs signaux d'horloge d'échantillonnage dérivés d'un signal de référence commun.

En variante, le signal OL d'oscillateur local utilisé pour les transpositions n'est ni identique, ni dérivé d'une même référence d'horloge que le signal d'horloge commun aux convertisseurs analogique-numériques ADC et numérique-analogiques DAC.

Le dispositif de compensation 34 de la réponse fréquentielle et temporelle de la première chaine radiofréquence 6 à calibrer comporte ici un filtre de compensation 66 sur la bande de fréquences de la première chaîne analogique 6 à calibrer des disparités en amplitude et en phase causées par ladite première chaine analogique 6 à calibrer, et un optimiseur 68 des coefficients du filtre de compensation.

Le filtre de compensation 66 est disposé ici directement en aval de la première chaine radiofréquence 6 à calibrer et directement en amont du soustracteur numérique 38 du dispositif d'effacement temporel 36. Le filtre de compensation 66 comporte un port d'entrée 70, connecté au premier port aval 10 de la première chaine 6, et un port de sortie 72, connecté à un premier port 74 d'entrée du soustracteur numérique 38.

Le filtre de compensation 66 est configuré pour mettre en œuvre la compensation à partir de commandes de coefficients de filtrage dudit filtre de compensation 66, les commandes étant déterminées à partir de mesures d'un quatrième signal observé, prises ici directement en aval du soustracteur en un port 76 de prise de mesure(s).

L'optimiseur 68 est ici un optimiseur utilisant un traitement adaptatif, c'est-à-dire un traitement itératif ou récursif au sein d'un asservissement, ou utilisant un traitement en bloc d'un ensemble d'échantillons mesurés en bloc, connecté ici entre le port 76 de prise de mesure(s) et un port de commande 78 du filtre de compensation 66.

L'optimiseur 68 est configuré pour déterminer les commandes des coefficients du filtre de compensation 66 à partir de mesures du quatrième signal observé, prises directement en aval du soustracteur numérique 38 en le port 76 de prise de mesure(s), et à partir du deuxième signal de calibration de référence issu du générateur numérique 39.

De manière générale et selon diverses variantes, l'optimiseur adaptif ou en bloc 68 peut opérer indifféremment sur les points de mesures 70, 72 ou 74, et 76, de manière séquentielle ou conjointe, selon l'algorithme d'optimisation employé. En effet, selon l'état d'avancement du processus de calibration, ou selon le type de l'algorithme d'optimisation employé, la prise de mesure peut se faire en différents points (i.e les points 70, 72, ou 76) pour améliorer la performance et faciliter la convergence de l'algorithme. L'objectif de l'optimiseur est de configurer, via le port de commande 78, un actionneur de compensation (un filtre de compensation 66 pour la Figure 1 ou un autre dispositif) à partir de mesures d'un des points 70, 72 ou 76, choisi comme point de mesure et du signal de calibration de référence issu du générateur 39 du signal de calibration de référence. Ainsi l'optimiseur comporte une seconde borne d'entrée pour recevoir le signal de calibration de référence issu du générateur 39 du signal de calibration. L'algorithme utilisé dans l'optimiseur peut opérer dans le domaine temporel ou fréquentiel, de manière itérative/récursive ou par bloc d'échantillons. Les algorithmes employés dans l'optimiseur peuvent être indifféremment: des algorithmes par Transformée de Fourier, des algorithmes de type moindres carrés comme par exemple les algorithmes LS (en anglais « Least Square »), LMS (en anglais « Least Mean Square »), RLS (en anglais « Recursive Least Squares »), des algorithmes utilisant des covariances ou des corrélations, des algorithmes de type CMA (en anglais « Covariance Matrix Adaptation »).

Le dispositif d'effacement temporel 36 comporte le générateur numérique 39 du deuxième signal de calibration de référence numérique en partage avec le dispositif d'injection 32, le soustracteur numérique 38, et une troisième chaine numérique 80 de fourniture d'une réplique du signal de calibration de référence à soustraire, adaptée en termes d'une fréquence de transposition compatible de la fréquence de sortie de la première chaine radiofréquence 6 à calibrer, et d'un gain et retard compatibles des gains et des temps de propagation du signal le long du chemin de propagation traversant successivement le dispositif d'injection 32, la première chaine radiofréquence 6 à calibrer et le filtre de compensation 66.

Ici, la troisième chaine numérique 80 comporte un circuit de modélisation 82 ou un « modèle » de référence numérique de la réponse temporelle et fréquentielle de la première chaîne 6 à calibrer et du filtre de compensation 66, ledit circuit de modélisation 80 étant configuré pour servir de référence à l'optimiseur adaptatif 68. Le modèle choisi correspond à une compensation idéale de la première chaine 6 à calibrer et la fonction de transfert réalisée par le modèle se ramène à un décalage temporel prédéterminé uniforme sur toute la bande du signal de trafic.

Ainsi, le dispositif d'effacement temporel 36 est configuré pour soustraire de manière cohérente une réplique adaptée du signal de calibration de référence.

Les circuits numériques formant le dispositif d'injection en partie, et le dispositif de compensation en totalité, et le dispositif d'effacement temporel en totalité sont réalisés par exemple par des circuits numériques discrets ou intégrés dans un ou plusieurs circuits intégrés dédiés.

Les circuits numériques formant le dispositif d'injection en partie, et le dispositif de compensation en totalité, et le dispositif d'effacement temporel en totalité peuvent être remplacés par un ou plusieurs processeurs électroniques classiques programmables, les fonctions numériques des circuits numériques étant réalisées à l'aide de modules logiciels exécutés par le ou lesdits processeurs.

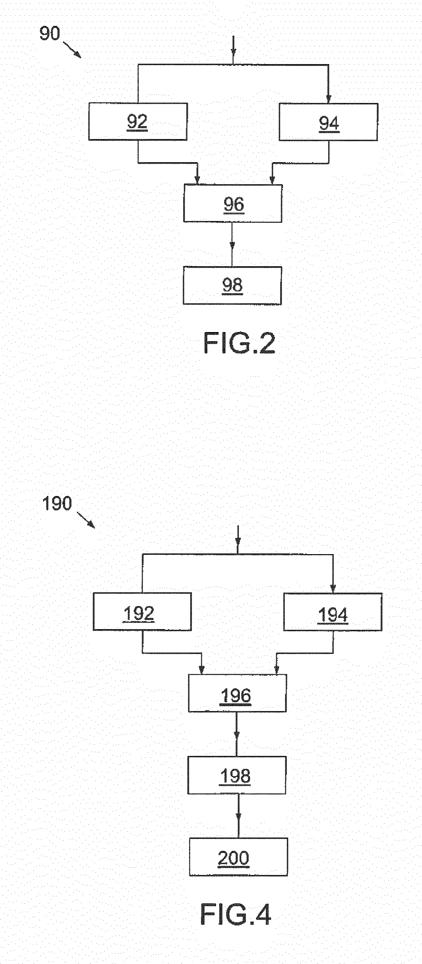

Suivant la Figure 2 et un premier mode de réalisation, un procédé de calibration dynamique 90 d'une première chaîne analogique radiofréquence de réception 6 d'une charge utile de satellite, mis en œuvre par le système de calibration dynamique 2 de la Figure 1 comprend un ensemble d'étapes.

Dans une première étape 92, un signal de calibration analogique prédéterminé, ayant une largeur de bande inférieure ou égale à la bande utile de la première chaine sur laquelle la calibration est effectuée, est injecté en entrée de la première chaîne RF 6 à calibrer. Le signal de calibration prédéterminé est injecté après avoir été d'abord généré par le générateur numérique 39 d'un signal de calibration de référence numérique sur une bande de fréquences, puis transposé dans une bande de fréquences compatible de la bande d'entrée de la première chaine RF à calibrer 6, avec une puissance ajustée relativement à celle d'un signal utile afin de ne pas saturer le premier convertisseur analogique-numérique ADC de sortie 18. Ainsi le signal de calibration est superposé au signal de trafic utile pour former le premier signal amont d'entrée, en tant qu'un signal composite, somme analogique du deuxième signal et du troisième signal, et le premier signal amont d'entrée traverse toutes les fonctions de la première chaîne 6 à calibrer 6 jusqu'au port d'entrée 70 du filtre de compensation 66.

Dans une deuxième étape 94, exécutée en parallèle de la première étape 92, le dispositif d'effacement temporel 36 construit une réplique du signal de calibration à partir du signal calibration de référence issu du générateur 39 et d'un modèle de référence 82, ici numérique, correspondant à la réponse de la première chaine RF compensée, et ayant une fonction de transfert constituée d'un simple retard constant prédéterminé.

Puis dans une troisième étape 96, le soustracteur numérique 38 soustrait au premier signal de sortie composite, délivré en sortie du filtre de compensation 66 et formant la réponse de la première chaine 6 compensée par le filtre de compensation 66 au premier signal d'entrée amont composite, la réplique du signal de calibration issue du modèle de référence 82, et efface ainsi le signal de calibration injecté dans le premier signal composite compensé.

Ensuite dans une quatrième étape 98, le signal différence du soustracteur numérique 38, prélevé au port de prise de mesure 76, et le signal de calibration de référence, issu du générateur 39, servent à optimiser les coefficients du filtre de compensation 66, afin de minimiser la puissance du signal différence.

L'optimisation est réalisée à l'aide de l'optimiseur 68 compris dans l'ensemble formé par les optimiseurs utilisant un traitement adaptatif, c'est-à-dire un traitement itératif ou récursif au sein d'un asservissement, et les optimiseurs utilisant un traitement en bloc d'un ensemble d'échantillons mesurés en bloc.

Au cours de la quatrième étape 98 et de manière générale, l'optimiseur 68 configure, via le port de commande 78, un actionneur de compensation (un filtre de compensation 66 pour la Figure 1 ou un autre dispositif) à partir de mesures du point 76, choisi comme point de mesure, et du signal de calibration de référence issu du générateur 39 du signal de calibration de référence. L'algorithme utilisé dans l'optimiseur peut opérer dans le domaine temporel ou fréquentiel, de manière itérative/récursive ou par bloc d'échantillons. Les algorithmes employés dans l'optimiseur peuvent être indifféremment: des algorithmes par Transformée de Fourier, des algorithmes de type moindres carrés comme par exemple les algorithmes LS, LMS, RLS ou des algorithmes utilisant des covariances ou des corrélations comme par exemple des algorithmes de type CMA.

En variante, le point de mesure 76 est remplacé par l'un des points 70 et 72.

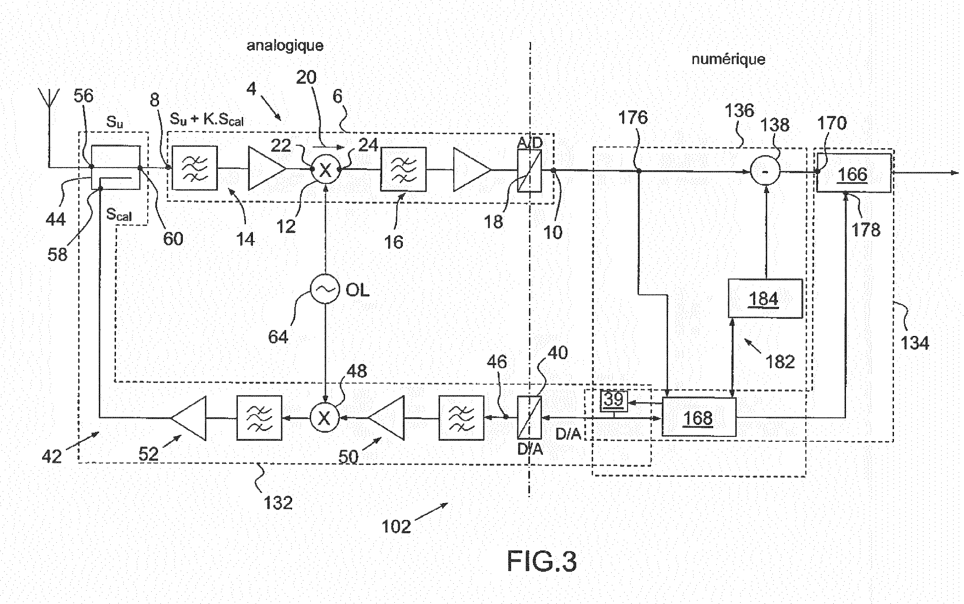

Suivant la Figure 3 et un deuxième mode de réalisation de l'invention, un système de calibration dynamique 102 est représenté pour lequel le circuit à calibrer 4 et les divers éléments de ce circuit sont identiques à ceux du circuit 4 de la Figure 1 et sont désignés par les mêmes références numériques.

Le système de calibration dynamique 102 comprend :
.- un dispositif d'injection 132 d'un deuxième signal de calibration dont la forme d'onde est connue, disposé en entrée et en amont de la première chaine radiofréquence à calibrer 6, et dont l'architecture est identique ou similaire à celle du dispositif d'injection 32 de la Figure 1, et
.- un dispositif de compensation 134 de la réponse fréquentielle et temporelle de la première chaine radiofréquence 6 à calibrer sur la bande utile de la première chaîne 6, et
.- un dispositif d'effacement temporel 136 du deuxième signal de calibration injecté ayant un soustracteur numérique 138.

A l'instar du dispositif d'injection 32 de la Figure 1, le dispositif d'injection 132 est configuré pour injecter le deuxième signal de calibration a fort niveau, permettre d'optimiser la précision de l'estimation de la réponse spectrale et temporelle de la première chaîne à calibrer, et permettre d'optimiser la compensation de la première chaîne 6 à calibrer.

En pratique, la puissance du deuxième signal de calibration est ajustée dynamiquement relativement à celle du troisième signal utile afin de ne pas saturer le premier convertisseur analogique-numérique ADC de sortie 18. Le réglage est par exemple réalisé au niveau de la génération numérique 39 du signal de calibration, la deuxième chaîne analogique 42 ayant un gain maintenu constant, ou au niveau de la deuxième chaine analogique 42 en ajustant son gain.

A l'instar du système de calibration dynamique 2 de la Figure 1, la fréquence du signal de transposition du premier circuit de transposition abaisseur 12 et du deuxième circuit de transposition élévateur 48 est identique, et le signal de transposition est fourni par un même oscillateur local 64, asservi sur une horloge maîtresse de référence, non représentée sur la Figure 3. De même les horloges d'échantillonnage du convertisseur analogique-numérique de sortie 18 de la première chaine 6, du convertisseur numérique-analogique 40 d'entrée de la deuxième chaine analogique 42, et du générateur numérique 39 du deuxième signal de calibration de référence sont synchronisées ici de manière préférée sur l'horloge maîtresse de référence.

De manière générale, tous les convertisseurs analogique-numérique ADC et numérique-analogique DAC utilisent un ou plusieurs signaux d'horloge d'échantillonnage dérivés d'un signal de référence commun.

En variante, le signal OL d'oscillateur local utilisé pour les transpositions n'est ni identique, ni dérivé d'une même référence d'horloge que le signal d'horloge commun aux convertisseurs analogique-numériques ADC et numérique-analogiques DAC.

Le dispositif de compensation 134 de la réponse fréquentielle et temporelle de la première chaine radiofréquence 6 à calibrer comporte ici un filtre de compensation 166 de type égaliseur sur la bande utile de fréquences de la première chaîne analogique 6 à calibrer, pour compenser les disparités en amplitude et en phase causées par la première chaine analogique 6 à calibrer, et un contrôleur de calibration 168, configuré pour déterminer des commandes des coefficients de filtrage du filtre de compensation 166.

Le filtre de compensation 166 est disposé ici directement en aval du soustracteur numérique 138 du dispositif d'effacement temporel 136, le soustracteur numérique 138 étant disposé directement en aval de la première chaine analogique 6 à calibrer, à la sortie du convertisseur analogique 18.

Le filtre de compensation 166 comporte un port d'entrée 170, connecté au port de sortie du soustracteur numérique 138, et est configuré pour mettre en œuvre la compensation à partir de commandes de réglage de coefficients de filtrage dudit filtre de compensation 166. Les commandes de réglage sont déterminées à partir de plusieurs mesures d'un quatrième signal composite observé prises directement en aval de la première chaîne analogique 6 à calibrer en un port 176 de prise de mesure(s).

Le contrôleur de calibration 168 est connecté entre le port 176 de prise de mesure(s) et un port de commande 178 du filtre de compensation 166.

Le contrôleur de calibration 168 est configuré pour recevoir du générateur numérique 39 un ou de plusieurs signaux de calibration de référence, et pour estimer des paramètres caractéristiques des signaux de calibration observés de la séquence temporelle à partir desdits signaux de calibration de référence.

Le contrôleur de calibration 168 est ainsi configuré pour déterminer la réponse spectrale de la première chaîne analogique 6 à calibrer à partir des estimations des deuxièmes signaux de calibrations mesurés au port 176, puis calculer la réponse du filtre de compensation 166, et ensuite déterminer les coefficients associés pour le filtre de compensation.

Le dispositif d'effacement temporel 136 comporte le générateur numérique 39 de la séquence des deuxièmes signaux de calibration de référence numérique en partage avec le dispositif d'injection 132, le contrôleur de calibration 168, le soustracteur numérique 138, et une troisième chaine numérique 182 de fourniture des répliques des signaux de calibration de référence de la séquence à soustraire, adaptées en termes d'une fréquence de transposition compatible de la fréquence de sortie de la chaine radiofréquence 6 à calibrer, de gains et retards compatibles respectivement des gains et des temps de propagation des deuxièmes signaux de calibration le long du chemin de propagation traversant successivement, le dispositif d'injection 132 et la première chaine radiofréquence 6 à calibrer.

Ici, la troisième chaine numérique 182 comporte le contrôleur de calibration 168 servant d'estimateur des paramètres caractéristiques des signaux de calibration observés après la première chaîne analogique 6 à calibrer correspondant à la séquence temporelle des deuxièmes signaux de calibration, et un générateur 184 de répliques, adaptées aux deuxièmes signaux de calibration observés, et à soustraire.

Ainsi, le dispositif d'effacement temporel 136 est configuré pour soustraire de manière cohérente les répliques adaptées des signaux de calibration de référence de la séquence temporelle en sortie de la première chaîne analogique 6 à calibrer.

Les circuits numériques formant le dispositif d'injection en partie, et le dispositif de compensation en totalité, et le dispositif d'effacement temporel en totalité sont réalisés par exemple par des circuits numériques discrets ou intégrés dans un ou plusieurs circuits intégrés dédiés.

Les circuits numériques formant le dispositif d'injection en partie, et le dispositif de compensation en totalité, et le dispositif d'effacement temporel en totalité peuvent être remplacés par un ou plusieurs processeurs électroniques classiques programmables, les fonctions numériques des circuits numériques étant réalisées à l'aide de modules logiciels exécutés par le ou lesdits processeurs.

Suivant la Figure 4 et un deuxième mode de réalisation, un procédé de calibration dynamique 190 d'une première chaine analogique radiofréquence de réception 6 d'une charge utile de satellite, mis en œuvre par le système de calibration dynamique 102 de la Figure 3 comprend un ensemble d'étapes.

Dans une première étape 192, un deuxième signal de calibration analogique prédéterminé, ayant une largeur de bande inférieure ou égale à la bande utile de la première chaîne 6 sur laquelle la calibration est effectuée, est injecté en entrée de la première chaîne RF 6 à calibrer, le plus souvent après une source antenne. Le deuxième signal de calibration prédéterminé est injecté après avoir été généré par le générateur de référence numérique 39 et transposé à une fréquence porteuse compatible de la bande d'entrée de la première chaine RF 6 à calibrer, avec une puissance ajustée dynamiquement relativement à celle d'un troisième signal utile afin de ne pas saturer le premier convertisseur analogique-numérique ADC de sortie 18. Ainsi le signal de calibration est superposé au signal de trafic utile pour former le premier signal amont d'entrée, en tant qu'un signal composite, somme analogique du deuxième signal et du troisième signal, et le premier signal amont d'entrée traverse toutes les fonctions de la première chaîne 6 à calibrer jusqu'au port d'entrée 170 du filtre de compensation 166.

Dans une deuxième étape 194, exécutée en parallèle de la première étape 192, le contrôleur de calibration 168 estime, à partir de la mesure du premier signal aval de sortie de la première chaine 6 et du deuxième signal de calibration, issu du générateur 39 numérique, les paramètres caractérisant la déformation du deuxième signal de calibration tels que le gain, le retard, la phase, lesdits paramètres permettant de définir une compensation pour différentes fréquences de la réponse fréquentielle de la première chaine analogique 6 à calibrer.

Ensuite dans une troisième étape 196, le générateur 184 de répliques adaptées construit pour chaque deuxième signal de calibration observé de la séquence, une réplique locale du signal de calibration à partir des paramètres estimés (gain, retard, phase) fournis par le contrôleur de calibration 168.

Puis dans une quatrième étape 198, le soustracteur numérique 138 soustrait la réplique adaptée du signal de calibration du premier signal aval de sortie, afin de ne propager que le signal utile de trafic.

Ensuite dans une cinquième étape 200, le contrôleur de calibration 168 met à jour une fonction de correction de la réponse spectrale de la première chaine analogique 6 sur la bande utile de la première chaîne à calibrer à partir des écarts estimés entre les deuxièmes signaux de calibration, extraits du quatrième signal composite observé, et les signaux de calibration de référence correspondants, la fonction de correction étant mise en œuvre par le filtre de compensation 166.

Le soustracteur numérique 138 procède à l'effacement du signal de mesure du signal composite, en soustrayant la réplique adaptée, définie par les paramètres estimés et générée par le générateur numérique de réplique adaptée 184 paramétré à l'aide du contrôleur 168, du quatrième signal observé en le port 176 de prise de mesures, connecté ici au premier port de sortie en aval de la première chaîne.

En sortie du soustracteur numérique 138, le signal ne porte que le trafic, comme si le signal de calibration ou de mesure n'avait pas été injecté.

Les défauts de la réponse fréquentielle de la première chaine 6 de réception sont corrigés par le filtre de compensation 166 dans une fonction de compensation dont les coefficients de filtrage ont été calculés par le contrôleur de calibration 168.

Les solutions proposées dans les premier et deuxième modes de réalisation des systèmes et procédés de calibration dynamique, décrites par les Figures 1 à 4, permettent chacune une estimation précise et rapide des défauts de la première chaîne RF en fonction de la fréquence, grâce à un signal de mesure à support fréquentiel de largeur quelconque et de niveau élevé, ce qui améliore la précision et la rapidité de mesure des défauts amplitude/phase de la première chaine , ceci sur toute la bande utile, et ceci sans interruption de service et dégradation du signal RF utile pour les utilisateurs.

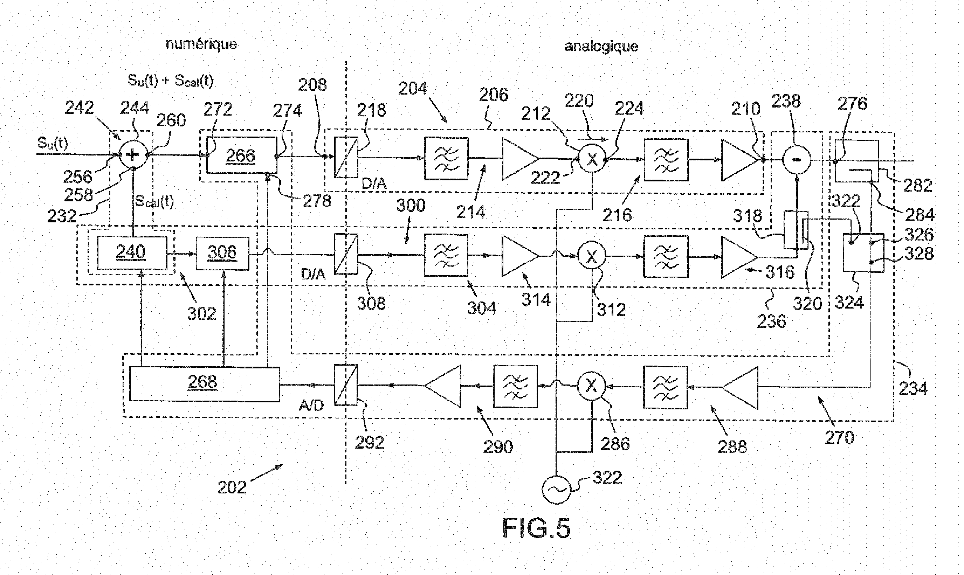

Suivant la Figure 5 et un troisième mode de réalisation de l'invention, un système de calibration dynamique 202 d'un circuit radiofréquence RF 204 à calibrer d'une charge utile de satellite est représenté.

Le circuit radiofréquence RF 204 comprend une chaine radiofréquence RF analogique 206, formant une première chaine à calibrer sur une bande utile de chaîne. Ici, la première chaîne analogique 206 est une chaine analogique d'un émetteur de communication, comprise entre en amont un premier port amont 208 de réception d'un premier signal numérique d'entrée et en aval un premier port aval 210 de fourniture d'un premier signal de sortie analogique.

Le premier signal analogique de sortie est la réponse fréquentielle et temporelle de la première chaîne analogique 206 à calibrer au premier signal amont d'entrée.

La première chaine radiofréquence analogique 206 à calibrer comporte un premier circuit de transposition élévateur de fréquences 212, un premier étage amont d'amplification 214, disposé en amont du premier circuit de transposition 212, un premier étage aval d'amplification 216, disposé en aval du premier circuit de transposition 212, et un premier convertisseur numérique-analogique d'entrée 218 dont le port d'entrée est connecté au premier port amont 208 de la première chaine radiofréquence 206 à calibrer. Le sens de l'amont vers l'aval est représenté par une flèche 220 orientée depuis le port d'entrée RF 222 vers le port de sortie RF 224 du circuit de transposition élévateur de fréquences 212.

De manière générale, la première chaine radiofréquence à calibrer peut contenir un nombre quelconque d'amplificateurs et/ou de filtres, supérieur ou égal à un, et non limité nécessairement à deux amplificateurs.

En variante, la première chaine radiofréquence à calibrer peut être dépourvue de transposition de fréquence par mélangeur et oscillateur local.

Le système de calibration automatique 202 comprend :
.- un dispositif d'injection 232 d'un deuxième signal de calibration numérique dont la forme d'onde est connue, disposé en entrée et en amont de la première chaine radiofréquence à calibrer 206, et
.- un dispositif de compensation 234 de la réponse fréquentielle et temporelle de la première chaine radiofréquence 206 à calibrer sur la bande utile de la première chaine 206, et
.- un dispositif d'effacement temporel 236 du deuxième signal de calibration injecté ayant un soustracteur analogique 238.

Le dispositif d'injection 232 du deuxième signal de calibration comporte, mis en série, un générateur numérique 240 d'un signal de calibration de référence numérique, et une deuxième chaine d'injection numérique 242, limitée ici à un sommateur numérique 244 de deux signaux numériques, connecté audit générateur numérique 240, les deux signaux numériques étant formés par un troisième signal utile d'entrée et le deuxième signal de calibration injecté.

Le deuxième signal de calibration a une largeur de bande utile inférieure ou égale à la largeur de bande utile de la première chaine à calibrer.

Le dispositif d'injection 232 est ici configuré pour injecter le deuxième signal de calibration qui a la même forme d'onde que le signal de calibration de référence, généré par le générateur numérique 240 du signal de calibration de référence.

Cette injection à lieu au travers du sommateur numérique 244 qui comporte un premier port d'entrée d'injection 256, un deuxième port d'entrée d'injection 258, connecté en aval de et à la sortie numérique du générateur numérique 240, et un troisième port de sortie d'injection 260, connecté au port d'entrée 208 de la première chaine à calibrer 206 au travers d'un filtre de compensation numérique 266 de la première chaine 206 à calibrer.

Le premier port d'entrée d'injection 256 est configuré pour recevoir le troisième signal utile d'entrée, par exemple un signal de trafic utile de communication, désigné par Sᵤ(t), tandis que le deuxième port d'entrée d'injection 258 est configuré pour recevoir le signal de calibration, désigné par S_{Cal}(t) et fourni en sortie du générateur numérique 240.

Le troisième port de sortie d'injection 260 est configuré pour fournir en entrée du filtre de compensation numérique 266 le signal d'entrée Sᵤ(t)+ S_{Cal}(t), égal à la somme temporelle du signal de trafic Sᵤ(t) et du signal de calibration S_{Cal}(t).

Le dispositif d'injection 232 est configuré pour injecter le deuxième signal de calibration a fort niveau, pour permettre d'optimiser la précision de l'estimation de la réponse spectrale et temporelle de la première chaîne à calibrer, et pour permettre d'optimiser la compensation de la première chaîne à calibrer.

En pratique, la puissance du deuxième signal de calibration est ajustée dynamiquement relativement à celle du troisième signal utile afin de ne pas saturer le premier convertisseur numérique-analogique DAC 218. Le réglage est réalisé au niveau du générateur numérique 240.

Le dispositif de compensation 234 de la réponse fréquentielle et temporelle de la première chaine radiofréquence 206 à calibrer comporte le filtre de compensation 266 sur la bande utile de fréquences de la première chaîne analogique 206 à calibrer des disparités en amplitude et en phase causées par la première chaine analogique 206 à calibrer, un optimiseur 268 des coefficients du filtre de compensation 266, et une quatrième chaine de mesures 270.

Le filtre de compensation numérique 266 est disposé ici directement en amont de la première chaine radiofréquence 206 à calibrer et directement en aval du sommateur numérique 244 du dispositif d'injection 232.

Le filtre de compensation numérique 266 comporte un port d'entrée 272, connecté au port de sortie 260 du sommateur numérique 244 et un port aval 274 de sortie, connecté au premier port amont 208 de la première chaine 206 à calibrer.

Le filtre de compensation 266 est configuré pour mettre en œuvre la compensation à partir de commandes de coefficients de filtrage dudit filtre 266, les commandes étant déterminées à partir de mesures d'un quatrième signal analogique observé, prises directement en aval du soustracteur analogique 238 en un port 276 de prise de mesure(s).

L'optimiseur 268 est ici un optimiseur utilisant un traitement adaptatif, c'est-à-dire un traitement itératif ou récursif au sein d'un asservissement, ou utilisant un traitement en bloc d'un ensemble d'échantillons mesurés en bloc, connecté indirectement en aval au port 276 de prise de mesure(s) au travers de la quatrième chaine de mesure 270 et directement en amont à un port de commande 278 du filtre de compensation 266.

L'optimiseur 268 est configuré pour déterminer les commandes des coefficients du filtre de compensation 266 à partir d'un ensemble de mesures du quatrième signal observé, prises directement en aval du soustracteur analogique 238 en le port 276 de prise de mesure(s), et à partir du deuxième signal de calibration de référence issu du générateur numérique 240.

De manière générale et selon diverses variantes, l'optimiseur adaptif ou en bloc 268 peut opérer de manière itérative ou en bloc, selon l'algorithme d'optimisation employé. L'objectif de l'optimiseur est de configurer, via le port de commande 278, un actionneur de compensation (un filtre de compensation 266 pour la Figure 5 ou un autre dispositif) à partir de mesures du point 276, choisi comme point de mesure, et du signal de calibration de référence issu du générateur 240 du signal de calibration de référence. Ainsi l'optimiseur comporte une seconde borne d'entrée pour recevoir le signal de calibration de référence issu du générateur 240 du signal de calibration. L'algorithme utilisé dans l'optimiseur peut opérer dans le domaine temporel ou fréquentiel, de manière itérative/récursive ou en bloc. Les algorithmes employés dans l'optimiseur peuvent être indifféremment: des algorithmes par Transformée de Fourier, des algorithmes de type moindres carrés comme par exemple les algorithmes LS, LMS, RLS, des algorithmes utilisant des covariances ou des corrélations, des algorithmes de type CMA.

La quatrième chaine de mesures 270 est une chaîne analogique d'acheminement de mesures du quatrième signal observé, prises directement en aval du soustracteur analogique 238, jusqu'à l'optimiseur adaptatif numérique 268.

La quatrième chaine de mesure analogique 270 comporte en amont un coupleur de mesure 282 à une voie d'entrée, connecté au port de prise de mesure 276, et deux voies de sortie dont une voie d'extraction de mesure connectée à un port de mesure 284.

La quatrième chaine de mesure analogique 270 comporte un quatrième circuit de transposition 286 abaisseur de fréquences, un quatrième étage amont d'amplification 288 disposé en amont du quatrième circuit de transposition abaisseur 286 et connecté en entrée au port de mesure 284, un quatrième étage aval d'amplification 290 disposé en aval du quatrième circuit de transposition abaisseur 286, et un convertisseur analogique-numérique de sortie 292 disposé en extrémité aval de la chaine de mesure 270.

Le dispositif d'effacement temporel 236 comporte le générateur numérique 240 du signal de calibration de référence numérique en partage avec le dispositif d'injection 232, le soustracteur analogique 238, et une troisième chaine hybride numérique-analogique 300 de fourniture d'une réplique du signal de calibration de référence à soustraire, adaptée en termes d'une fréquence de transposition compatible de la fréquence de sortie de la chaine radiofréquence 206 à calibrer et d'un retard compatible des temps de propagation du signal le long du chemin de propagation traversant successivement la première chaine radiofréquence 206 à calibrer et le filtre de compensation 266.

Ici, la troisième chaine hybride numérique-analogique 300 comporte, mise en série, une troisième sous-chaine numérique 302 et une troisième sous-chaine analogique 304.

La troisième sous-chaine numérique 302 inclut en série un circuit numérique de reproduction 306 d'un modèle de référence numérique d'une réponse temporelle et fréquentielle de la première chaîne radiofréquence 206 et du filtre de compensation 266 de la première chaine 206 lorsque le filtre de compensation 266 est optimisé, et de correction des dispersions en amplitude et en phase causées par la troisième sous-chaine analogique 304, et un troisième convertisseur numérique-analogique 308.

La troisième sous-chaine analogique 304 comporte un troisième circuit de transposition 312 élévateur de fréquences, un troisième étage amont d'amplification 314, disposé en amont du troisième circuit de transposition 312, un troisième étage aval 316 d'amplification de puissance, disposé en aval du troisième circuit de transposition 312, et un coupleur de mesure 318, connecté entre le troisième étage aval 316 et le soustracteur analogique 238, et dont la ligne 320 de rapport des mesures est connectée à un premier port d'entrée 322 d'un commutateur 324 à deux entrées 322, 326 et une sortie 328.

Le commutateur 324, connecté entre, d'une part la borne d'entrée 284 du coupleur de mesure 282 au travers de son deuxième port d'entrée 326, et d'autre part l'entrée du quatrième étage amont d'amplification 288 au travers de son port de sortie 328, est configuré pour rapatrier sélectivement sur commande des mesures prises parmi des mesures en sortie de la première chaine analogique 206 à calibrer et des mesures en sortie de la troisième sous-chaîne analogique 304. Il est à remarquer que le circuit de reproduction 306 d'un modèle de référence numérique est configuré pour recevoir des commandes de correction de la réponse temporelle et fréquentielle de la troisième sous-chaine analogique 304, lesdites commandes de correction étant déterminées par l'optimiseur adaptatif numérique 268, et la chaine de mesure 270 étant supposée calibrée et ne pas affecter les mesures effectuées en la prise de mesure 276.

Le soustracteur analogique 238 est ici un dispositif compris dans l'ensemble formé par les coupleurs hybride 180° et les coupleurs hybride en anneau, chacun de ces dispositifs étant configuré pour réaliser la combinaison en opposition du premier signal de sortie de la première chaîne à calibrer 206 et du signal de sortie de chaîne hybride 300.

En variante, le dispositif d'effacement 236 réalise la soustraction du signal de calibration à partir d'un coupleur réalisant la combinaison en phase du premier signal en sortie de la première chaîne à calibrer 206 et du signal en sortie de la chaine hybride 300, un de ces signaux étant préalablement inversé soit dans un des filtres de compensation (266 ou 306), soit au niveau du générateur de signal 240, soit par un déphasage de 180° du signal OL d'oscillateur local en entrée d'un des circuits de transposition de fréquence 212 ou 312.

Ici, les fréquences des signaux de transposition du premier circuit de transposition élévateur 212 en tant que circuit de transposition de la première chaine, du troisième circuit de transposition élévateur 312 en tant que circuit de transposition de la troisième chaine, et du quatrième circuit de transposition abaisseur 286 en tant que circuit de transposition de la quatrième chaine sont identiques et un signal de transposition commun est fourni par un même oscillateur local partagé 322, asservi sur une horloge maîtresse de référence, non représentée sur la Figure 5. De même les horloges d'échantillonnage du convertisseur analogique-numérique 292, des convertisseurs numérique analogique 218, 308, et du générateur numérique 240 du signal de calibration de référence sont synchronisées sur l'horloge maîtresse de référence.

De manière générale, tous les mélangeurs des différentes chaînes utilisent un même signal OL d'oscillateur local, à un déphasage près, pour réaliser les transpositions de fréquences montantes ou descendantes.

De manière générale, tous les convertisseurs analogique-numérique ADC et numérique-analogique DAC utilisent un ou plusieurs signaux d'horloge d'échantillonnage dérivés d'un signal de référence commun.

En variante, le signal OL d'oscillateur local utilisé pour les transpositions n'est ni identique, ni dérivé d'une même référence d'horloge que le signal d'horloge commun aux convertisseurs analogique-numériques ADC et numérique-analogiques DAC.

En variante, les première, troisième, quatrième chaînes sont dépourvues de circuits de transposition fréquentielle.

La configuration du dispositif d'effacement temporel 236 de la Figure 5 permet ainsi de soustraire de manière cohérente au premier signal de sortie de la première chaîne 206 à calibrer une réplique adaptée du signal de calibration de référence.

Les circuits numériques formant le dispositif d'injection en totalité, et le dispositif de compensation en partie, et le dispositif d'effacement temporel en partie sont réalisés par exemple par des circuits numériques discrets ou intégrés dans un ou des circuits intégrés dédiés.

Les circuits numériques formant le dispositif d'injection en totalité , et le dispositif de compensation en partie, et le dispositif d'effacement temporel en partie peuvent être remplacés par un ou plusieurs processeurs électroniques classiques programmables, les fonctions numériques des circuit numériques étant réalisées à l'aide de modules logiciels exécutés par le ou lesdits processeurs.

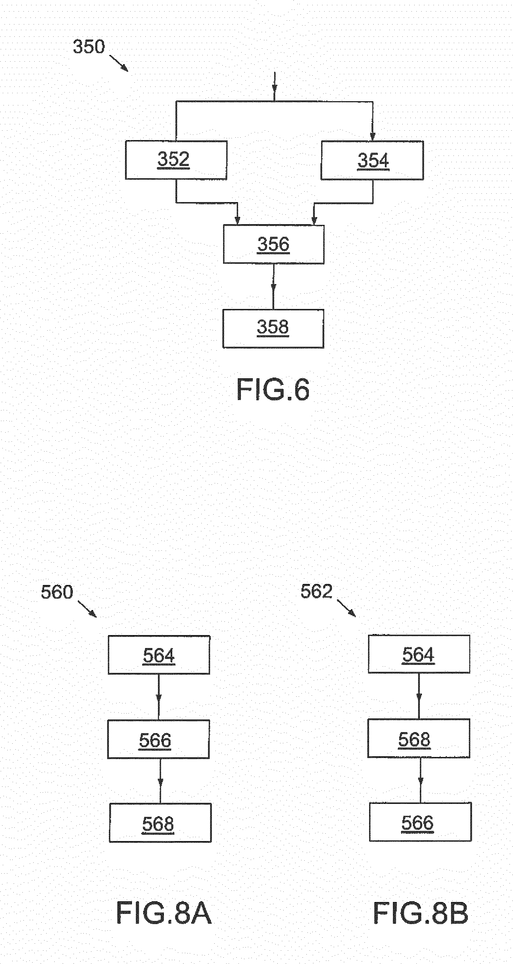

Suivant la Figure 6 et un troisième mode de réalisation, un procédé de calibration dynamique 350 d'une première chaine analogique radiofréquence d'émission 206 d'une charge utile de satellite, mis en œuvre par le système de calibration dynamique 202 de la Figure 5, comprend un ensemble d'étapes.

Dans une première étape 352, un signal de calibration numérique prédéterminé, ayant une largeur de bande inférieure ou égale à la bande utile de la première chaîne sur laquelle la calibration est effectuée, est injecté en entrée du filtre de compensation numérique 266, précédant la première chaîne RF 206 à calibrer. Le signal de calibration prédéterminé est généré par le générateur numérique 240 d'un signal de calibration de référence dans une bande de fréquence incluse dans et compatible de la bande d'entrée de la première chaine analogique 206 à calibrer, et additionné numériquement au signal de trafic utile pour former un premier signal composite amont d'entrée. La puissance du signal de calibration injecté est ajustée relativement à celle du signal de trafic utile afin de ne pas saturer le premier convertisseur numérique-analogique DAC 218. Le premier signal composite amont d'entrée traverse ensuite toutes les fonctions de la première chaîne 206 à calibrer jusqu'au premier port de sortie aval 210.

Dans une deuxième étape 354, exécutée en parallèle de la première étape 352, le dispositif d'effacement temporel 236 construit une réplique du signal de calibration à partir du signal calibration de référence et d'un modèle de référence 306, ici numérique, correspondant à la réponse de la première chaine RF compensée et à la correction de la réponse de la troisième sous-chaine analogique 304 d'amplification et de transposition du dispositif d'effacement temporel 236. La fonction de transfert de la réponse de la première chaine RF compensée est constituée d'un simple retard constant prédéterminé sur la totalité de la bande utile de la première chaîne.

Puis dans une troisième étape 356, le soustracteur analogique 238 soustrait au signal composite en sortie 210 de la première chaine analogique 206 d'émission en tant que signal de réponse au premier signal composite de la première chaine 206 compensée par le filtre de compensation 266, la réplique du signal de calibration issue du circuit de reproduction 306 et transposée à la fréquence de sortie de la première chaine 206 d'émission, et efface ainsi le signal de calibration injecté du signal composite compensé.

Ensuite dans une quatrième étape 358, une partie du signal différence du soustracteur analogique 238, prélevé comme signal de mesure au port de prise de mesure 276 à l'aide du coupleur analogique 282, et le signal de calibration de référence issu du générateur numérique 240 servent à optimiser les coefficients du filtre de compensation 266 sur la première chaine à calibrer 206, afin de minimiser la puissance du signal différence.

L'optimisation est réalisée à l'aide de l'optimiseur 268 compris dans l'ensemble formé par les optimiseurs utilisant un traitement adaptatif, c'est-à-dire un traitement itératif ou récursif au sein d'un asservissement, et les optimiseurs utilisant un traitement en bloc d'un ensemble de mesures.

Au cours de la quatrième étape 358 et de manière plus générale, l'optimiseur 268 configure, via un premier port de commande, un actionneur de compensation (le filtre de compensation 266 pour la Figure 1 ou un autre dispositif) à partir de mesures du point 276, choisi comme point de mesure et du signal de calibration de référence issu du générateur 240 du signal de calibration de référence. L'algorithme utilisé par l'optimiseur peut opérer dans le domaine temporel ou fréquentiel, de manière itérative/récursive ou par bloc d'échantillons. Les algorithmes employés dans l'optimiseur peuvent être indifféremment: des algorithmes par Transformée de Fourier, des algorithmes de type moindres carrés comme par exemple les algorithmes LS, LMS, RLS ou des algorithmes utilisant des covariances ou des corrélations comme par exemple des algorithmes de type CMA.

L'optimiseur 268 configure également via un deuxième port de commande, le circuit de reproduction 306 d'un signal de calibration adapté pour la fonction effacement à partir de mesures du point 276, choisi comme point de mesure et du signal de calibration de référence issu du générateur 240 du signal de calibration de référence.

Pour l'élaboration des commandes du filtre de compensation 266 et du circuit de reproduction 306 d'une réplique adaptée, l'optimiseur prend en compte la fonction de transfert de la première chaîne à calibrer compensée par le filtre de compensation et de la quatrième chaîne de mesures, mises en série.

Le signal différence observé à la sortie du soustracteur analogique 238 et en régime établi, c'est-à-dire lorsque la calibration ou la compensation a convergé, correspond au signal de trafic seul après élimination ou effacement du signal de calibration.

Dans la même quatrième étape 358, le signal de mesure peut servir également à corriger les dispersions en amplitude et phase causées par la troisième sous-chaine analogique 304 au signal d'effacement.

La solution proposée dans le troisième mode de réalisation des système et procédé de calibration dynamique, décrit par les Figures 5 et 6, permet une estimation précise et rapide des défauts de la première chaîne RF à calibrer, grâce à un signal de calibration ayant un niveau d'injection élevé en entrée de la première chaîne, ce qui améliore la précision et la rapidité de mesure des défauts amplitude/phase de la première chaine , ceci sur toute la bande utile de la première chaîne, et ceci sans interruption de service et dégradation du signal RF utile pour les utilisateurs.

De manière générale et indépendamment de la structure d'émetteur ou de récepteur de la première chaîne à calibrer, lorsque la compensation de la première chaîne à calibrer n'est pas idéale, le signal utile ainsi que le signal de calibration sont affectés de distorsions.

En sortie de la première chaîne à calibrer, le signal de calibration distordu superposé au signal utile distordu ne correspondant pas à la réplique du signal de calibration de référence, l'effacement est imparfait après le soustracteur 38 en Figure 1, 238 en Figure 5, 138 en Figure 3, et il reste un résidu de signal de calibration superposé au signal utile.

Ainsi le signal utile en sortie de chaine à calibrer et après soustraction est doublement affecté par les distorsions de la première chaine insuffisamment compensée et par le résidu de signal de calibration insuffisamment effacé.

L'effacement peut être imparfait si la réplique d'effacement est insuffisamment ajustée au signal multiplex en sortie de la première chaîne à calibrer.

C'est le cas en l'absence de connaissance précise a priori de la réponse spectrale et temporelle de la première chaîne à calibrer, soit au démarrage, soit du fait d'une évolution significative de la réponse de la chaine entre deux calibrations.

Dans le cas où l'effacement est imparfait, le signal de calibration résiduel constitue une source d'interférence pour le signal utile.

Pour limiter l'interférence du résidu de signal de calibration sur le signal utile dans le cas mentionné, une solution consiste à itérer plusieurs cycles de calibrations en augmentant progressivement la puissance du signal de calibration injecté en amont de la première chaine à calibrer. Chaque nouveau cycle permet d'améliorer la connaissance de la réponse spectrale et temporelle de la première chaîne, et permet d'améliorer sa compensation, et permet indirectement de mieux appairer le signal de calibration en sortie de chaine avec la réplique du signal de calibration de référence, pour finalement optimiser la qualité de l'effacement du signal de calibration en sortie de la première chaîne.

Par la suite, lorsque la connaissance de la réponse spectrale et temporelle de la première chaine est acquise et considérée stable, l'optimiseur 68, 168, 268 peut réaliser une calibration périodique plus rapide en injectant le signal de calibration directement sur un niveau élevé, pour disposer d'une bonne précision de calcul de la compensation, tout en garantissant l'absence de saturation du convertisseur analogique numérique, désigné par la référence numérique 18 en Figures 1 et 3 pour une chaine en réception, et désigné par la référence numérique 292 pour une chaine en émission.

De manière générale, un système de calibration dynamique selon l'invention permet de calibrer un circuit radiofréquence d'une charge utile de satellite comprenant une ou plusieurs premières chaines de récepteurs, et/ou une ou plusieurs chaines d'émetteurs.

Les dispositifs de calibration précédents, décrits dans les Figures 1, 3 et 5 sont généralisables pour calibrer en séquence un ensemble d'un nombre entier N de premières chaînes analogiques en mutualisant certaines ressources matérielles et logicielles, afin de limiter la complexité matérielle, la consommation électrique.

Dans le cas de chaines analogiques de type réception telles qu'illustrées dans les Figures 1 et 3, la chaine d'injection 32, 132 est mutualisée pour l'ensemble des N chaines de réception à calibrer. Le signal analogique de calibration est injecté en entrée de l'ensemble des chaines à calibrer soit simultanément avec un diviseur 1:N (en anglais « splitter »), soit séquentiellement avec une matrice de commutation 1 :N, ces éléments étant connectés en amont des coupleurs 44.

Dans le cas de chaines analogiques de type émission telles qu'illustrées dans la Figure 5, la chaine de réplique du dispositif d'effacement temporel 236 ainsi que la chaîne de mesure du dispositif de compensation 234 sont mutualisées pour l'ensemble des N chaines d'émission à calibrer.

Le signal analogique de calibration de référence adapté pour soustraction est injecté en sortie de l'ensemble des N chaines à calibrer soit simultanément avec un diviseur 1:N, soit séquentiellement avec une matrice de commutation 1:N, ces éléments étant connectés en amont des coupleurs 238.

Le signal analogique de mesure en sortie des coupleurs 284 est sélectionné par une matrice de commutation N:1 connectée en aval des coupleurs 284 et en amont de la chaine de mesure 234.

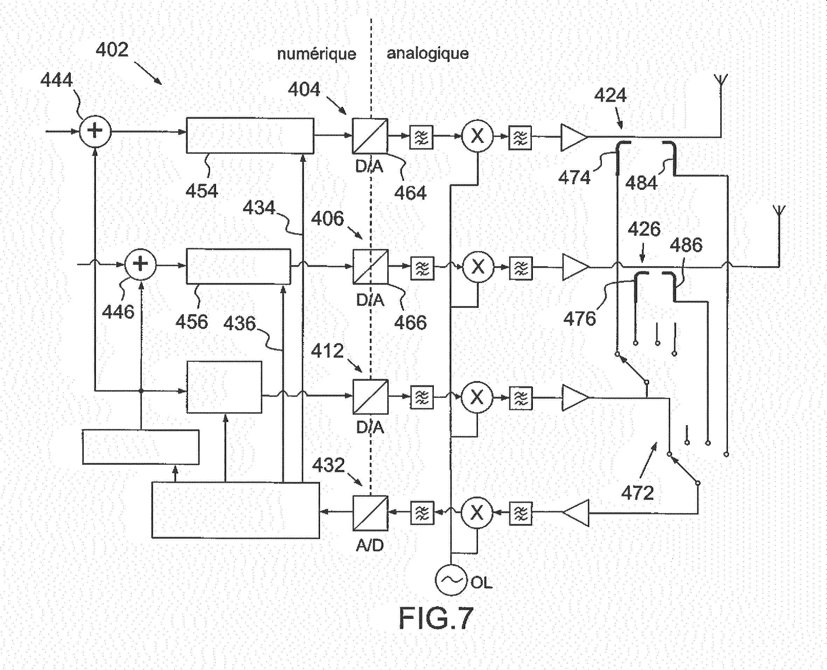

Suivant la Figure 7 et une quatrième forme de réalisation, un système de calibration dynamique 402 d'un ensemble de deux premières chaînes analogiques à calibrer d'émission 404, 406 comprend une chaine de réplique 412 du signal de calibration ou de référence, mutualisée à des premier et deuxième dispositifs d'effacement temporel 424, 426, associés respectivement à la première première chaîne analogique 404 et à la deuxième première chaîne analogique 406.

Le système de calibration dynamique 402 comprend également une chaîne de mesure 432 mutualisée à des premier et deuxième dispositifs de compensation 434, 436, associés respectivement à la première première chaîne analogique 404 et à la deuxième première chaîne analogique 406.

Le système de calibration dynamique 402 comprend ici des premier et deuxième sommateur d'injection 444, 446, connectés respectivement en amont de premier et deuxième filtres de compensation 454, 456, eux-mêmes respectivement connectés en amont de premier et deuxième convertisseurs numérique-analogiques 464, 466, le premier convertisseur numérique-analogique 464 et le deuxième convertisseur numérique-analogique 466 formant respectivement une entrée de la première chaîne analogique 404 et une entrée de la deuxième première chaîne analogique 406.

Le système de calibration dynamique 402 comprend un réseau de commutateurs 472 (en anglais « switches ») configurés pour acheminer de manière sélective des signaux de réplique de calibration depuis la chaine de réplique mutualisée vers un premier soustracteur analogique 474 et un deuxième soustracteur analogique 476, et pour acheminer de manière sélective des signaux de mesures de sortie des première première et deuxième première chaînes analogiques à calibrer depuis un premier coupleur analogique 484 et un deuxième coupleur analogique 486 de prélèvement vers la chaîne mutualisée de mesure 432.

Le premier soustracteur analogique 474 et le premier coupleur analogique 484 de prélèvement sont connectés entre eux et en sortie de la première chaîne à calibrer 404, tandis que le deuxième soustracteur analogique 476 et le deuxième coupleur analogique 486 de prélèvement sont connectés entre eux et en sortie de la deuxième chaîne à calibrer 406.

De manière générale, une première chaine radiofréquence à calibrer est une chaine analogique d'amplification et de filtrage avec ou sans transposition à une fréquence de transposition prédéterminée d'un premier signal d'entrée, formé par la somme temporelle d'un deuxième signal de calibration et d'un troisième signal utile d'entrée.

La première chaine radiofréquence à calibrer sur une bande utile de chaîne est comprise entre en amont un premier port amont de réception du premier signal d'entrée et en aval un premier port aval de fourniture du premier signal de sortie, le premier signal de sortie étant la réponse fréquentielle et temporelle de la chaine radiofréquence à calibrer au premier signal d'entrée.

De manière générale, le système de calibration automatique comprend :
.- un dispositif d'injection d'un deuxième signal de calibration dont la forme d'onde est prédéterminée en amont de la chaine radiofréquence à calibrer, le deuxième signal de calibration étant injecté directement sous forme numérique ou indirectement sous forme analogique au travers d'une deuxième chaine d'injection analogique à partir d'un signal de calibration de référence ;
.- un dispositif de compensation de la réponse fréquentielle et temporelle de la première chaine radiofréquence à calibrer, comportant un filtre de compensation sur la bande de fréquences utile de la première chaîne à calibrer, le filtre de compensation étant disposé en amont ou en aval de la première chaine radiofréquence à calibrer et la compensation étant réalisée à partir de mesures d'un quatrième signal, observé en aval de la première chaine radiofréquence à calibrer et du filtre de compensation, ou directement en aval de la première chaine à calibrer ;
.- un dispositif d'effacement temporel du signal de calibration injecté ayant un soustracteur analogique ou numérique, connecté en aval de la première chaîne radiofréquence à calibrer.

Le soustracteur analogique ou numérique peut être connecté directement en aval de la première chaine radiofréquence à calibrer ou en aval du filtre de compensation.

Le soustracteur numérique peut être connecté directement entre en amont la première chaine à calibrer et en aval le filtre de compensation.

De manière générale, le dispositif d'effacement temporel comporte également une troisième chaine numérique ou analogique de fourniture d'une réplique du signal de calibration de référence à soustraire.

La réplique est adaptée en termes de fréquence de transposition compatible de la fréquence de sortie de la chaine radiofréquence à calibrer, de retard compatible des temps de propagation du signal au travers du dispositif d'injection et de la première chaine radiofréquence à calibrer ou au travers du dispositif d'injection, de la première chaine radiofréquence à calibrer et du filtre de compensation.

Le dispositif d'effacement temporel est configuré pour soustraire de manière cohérente la réplique adaptée du signal de calibration de référence au signal de sortie de la première chaîne radiofréquence à calibrer afin de minimiser le résidu du signal de calibration en sortie.

Suivant les Figures 8A et 8B, un premier procédé général 560 et un deuxième procédé général 562 de calibration dynamique d'un circuit radiofréquence d'une charge utile de satellite englobent les procédés de calibration des Figures 2, 4 et 6.

Le circuit radiofréquence à calibrer, par exemple celui d'un récepteur ou d'un émetteur, comprend une première chaine radiofréquence à calibrer d'amplification et de filtrage et de transposition à une fréquence de transposition prédéterminée d'un premier signal d'entrée formé par la somme temporelle d'un deuxième signal de calibration et d'un troisième signal utile d'entrée.

La première chaine radiofréquence à calibrer sur une bande utile de chaîne est comprise entre en amont un premier port amont de réception du premier signal d'entrée et en aval un premier port aval de fourniture d'un premier signal de sortie, le premier signal de sortie étant la réponse fréquentielle et temporelle de la première chaine radiofréquence à calibrer au premier signal amont d'entrée.

Les premier et deuxième procédés généraux 560, 562 comprennent un ensemble d'étapes.

Dans une première étape 564, un dispositif d'injection injecte un deuxième signal de calibration dont la forme d'onde est prédéterminée en amont de la première chaine radiofréquence à calibrer, le deuxième signal de calibration étant injecté directement sous forme numérique ou indirectement sous forme analogique au travers d'une deuxième chaine d'injection analogique à partir d'un signal de calibration de référence.

Puis dans une deuxième étape 566, un dispositif de compensation compense, sur la bande utile de fréquences de la première chaîne, des disparités en amplitude et en phase causées par la première chaine à calibrer, à l'aide d'un filtre de compensation, disposé en amont ou en aval de la première chaine radiofréquence à calibrer, la compensation étant réalisée à partir de mesures d'un quatrième signal, observé en aval de la première chaine radiofréquence à calibrer et du filtre de compensation, ou directement en aval de la première chaine à calibrer.

Dans une troisième étape 568, exécutée après la première étape 564, un dispositif d'effacement temporel efface temporellement le signal de calibration injecté à l'aide d'un soustracteur analogique ou numérique, connecté en aval de la première chaîne à calibrer.

Suivant la Figure 8A et la première configuration 560 du procédé général de calibration dynamique, la troisième étape 568 est exécutée après la deuxième étape 566.

Cette première configuration est mise en œuvre par exemple dans les deux cas suivants.

Dans un premier cas, la première chaine à calibrer est la chaine d'un émetteur, le soustracteur est un soustracteur analogique, connecté directement en aval de la première chaine à calibrer, et le filtre de compensation est un filtre de compensation numérique disposé en amont de la chaine radiofréquence à calibrer.

Dans un deuxième cas, la première chaine à calibrer est la chaine d'un récepteur, le soustracteur est un soustracteur numérique, connecté directement en aval du filtre de compensation, et le filtre de compensation est un filtre de compensation numérique, disposé directement en aval de la première chaine à calibrer.

Suivant la Figure 8B et la deuxième configuration 562 du procédé général de calibration dynamique, la troisième étape 568 est exécutée avant la deuxième étape 566.

Cette deuxième configuration est mise en œuvre par exemple dans le cas où la première chaine à calibrer est la chaine d'un récepteur, le soustracteur est un soustracteur numérique, connecté directement entre en amont la première chaine à calibrer et en aval le filtre de compensation, et le filtre de compensation est un filtre de compensation numérique, disposé directement en aval du soustracteur numérique.

Le système et le procédé de calibration dynamique sont prévus pour être activés et fonctionner au choix de manière permanente, de manière répétée périodiquement ou a-périodiquement, ou sur demande au travers de l'envoi de télécommandes depuis le sol par exemple.

## Revendications

1. Système de calibration dynamique d'un circuit radiofréquence d'une charge utile de satellite,
le circuit radiofréquence RF (4 ; 204) comprenant une première chaine radiofréquence (6 ; 206) à calibrer d'amplification et de filtrage avec ou sans transposition à une fréquence de transposition prédéterminée d'un premier signal d'entrée formé par la somme temporelle d'un deuxième signal de calibration et d'un troisième signal utile d'entrée,
la première chaine radiofréquence (6 ; 206) à calibrer sur une bande utile de chaîne étant comprise entre en amont un premier port amont (8 ; 208) de réception du premier signal d'entrée et en aval un premier port aval (10 ; 210) de fourniture d'un premier signal de sortie, le premier signal de sortie étant la réponse fréquentielle et temporelle de la chaine radiofréquence (6 ; 206) à calibrer au premier signal d'entrée ; **caractérisé en ce que**:
le système de calibration dynamique comprend :
- un dispositif d'injection (32 ; 132 ; 232) du deuxième signal de calibration dont la forme d'onde est prédéterminée en amont de la première chaine radiofréquence (6 ; 206) à calibrer, le deuxième signal de calibration étant injecté directement sous forme numérique ou indirectement sous forme analogique au travers d'une deuxième chaine d'injection analogique (42) à partir d'un signal de calibration de référence, et la bande du deuxième signal de calibration étant incluse dans bande utile de la première chaîne à calibrer ; et
- un dispositif de compensation (34; 134; 234) de la réponse fréquentielle et temporelle de la première chaine radiofréquence (6 ; 206) à calibrer, comportant un filtre de compensation (66 ; 166 ; 266) sur la bande de fréquences utile de la première chaîne (6 ; 206) à calibrer,
le filtre de compensation (66; 166) étant disposé en aval de la première chaine radiofréquence (6) à calibrer lorsque le deuxième signal de calibration est injecté indirectement sous forme analogique, ou
le filtre de compensation (266) étant disposé en amont de la première chaine radiofréquence (66; 206) à calibrer lorsque le deuxième signal de calibration est injecté directement sous forme numérique, et
la compensation étant réalisée à partir de mesures d'un quatrième signal, observé en aval de la première chaine radiofréquence (6) à calibrer et du filtre de compensation (66) ou directement en aval de la première chaine (6) à calibrer lorsque le deuxième signal de calibration est injecté indirectement sous forme analogique, ou en aval de la première chaine (206) à calibrer lorsque le deuxième signal de calibration est injecté directement sous forme numérique, et
le système de calibration dynamique comprenant en outre
un dispositif d'effacement temporel (36 ; 136 ; 236) du deuxième signal de calibration injecté ayant
un soustracteur numérique (38 ; 138) lorsque le deuxième signal de calibration est injecté indirectement sous forme analogique, ledit soustracteur numérique étant connecté en aval de la première chaîne radiofréquence (6) à calibrer et du filtre de compensation (66) ou entre la première chaine radiofréquence et le filtre de compensation (166), ou
un soustracteur analogique (238) lorsque le deuxième signal de calibration est injecté directement sous forme numérique, ledit soustracteur analogique étant connecté entre la première chaine radiofréquence (206) à calibrer et le dispositif de compensation (234) ;
ledit dispositif d'effacement temporel (36; 136; 236) comporte également une troisième chaine numérique ou analogique (80 ; 182 ; 304) de fourniture d'une réplique du signal de calibration de référence à soustraire, adaptée en termes de fréquence de transposition compatible de la fréquence de sortie de la chaine radiofréquence (6 ; 206) à calibrer, de retard compatible des temps de propagation du signal au travers du dispositif d'injection (32 ; 132 ; 232) et de la première chaine radiofréquence (6 ; 206) à calibrer, ou au travers du dispositif d'injection, de la première chaine radiofréquence à calibrer et du filtre de compensation (66; 266) ; et
ledit dispositif d'effacement temporel (36 ; 136 ; 236) est configuré pour soustraire de manière cohérente la réplique adaptée du signal de calibration de référence au signal de sortie de la première chaîne radiofréquence (6 ; 206) à calibrer.

2. Système de calibration dynamique d'un circuit radiofréquence d'une charge utile de satellite selon la revendication 1,
comportant en outre un premier générateur d'un ou plusieurs signaux d'oscillateur local OL (64 ; 322) identiques à un déphasage près et synchronisés sur une première horloge de référence ; et dans lequel
lorsque la première chaine radiofréquence à calibrer comporte un ou plusieurs circuits de transposition de fréquences ; et/ou
lorsque la deuxième chaine d'injection est analogique et comporte un ou plusieurs circuits de transposition de fréquences ; et/ou
lorsque la troisième chaine de fourniture de la réplique adaptée est analogique et comporte un ou plusieurs circuits de transposition de fréquence,
le ou les premiers circuits de transposition, et/ou le ou les deuxièmes circuits de transposition, et/ou le ou les troisièmes circuits de transposition sont configurés pour utiliser le même signal OL d'oscillateur local (64 ; 322) à un déphasage près et réaliser les transpositions de fréquences montantes ou descendantes.

3. Système de calibration dynamique d'un circuit radiofréquence d'une charge utile de satellite selon l'une quelconque des revendications 1 à 2, dans lequel
lorsque l'injection du signal de calibration est numérique, le dispositif d'injection (232) du signal de calibration comporte un générateur numérique d'un signal de calibration de référence numérique (240) et un sommateur numérique (244) du signal de calibration de référence à un signal de trafic numérique, et
lorsque l'injection du signal de calibration est analogique, le dispositif d'injection (32; 132) du signal de calibration comporte un générateur numérique (39) d'un signal de calibration de référence numérique, un convertisseur numérique-analogique (40), et une deuxième chaine d'injection analogique incluant un coupleur analogique (44) fonctionnant en sommateur de deux signaux analogiques, et
le dispositif d'injection (32 ; 132 ; 232) du signal de calibration est configuré pour ajuster la puissance du deuxième signal de calibration dynamiquement relativement à celle du troisième signal utile au niveau le plus élevé possible compatible d'une absence de saturation d'un convertisseur analogique-numérique ou numérique-analogique de la première chaîne radiofréquence (6 ; 206) à calibrer, disposé respectivement en sortie ou en entrée de ladite première chaîne (6 ; 206).

4. Système de calibration dynamique d'un circuit radiofréquence d'une charge utile de satellite selon l'une quelconque des revendications 1 à 3, dans lequel,
la première chaine radiofréquence (6) à calibrer est une chaine analogique d'un récepteur de communication comportant un premier circuit de transposition abaisseur (12) de fréquences, un premier étage amont d'amplification (14) disposé en amont du premier circuit de transposition (12), un premier étage aval d'amplification (16) disposé en aval du premier circuit de transposition (12), et un premier convertisseur analogique-numérique de sortie (18), connecté en sortie de la première chaine (6) à calibrer ; et
le dispositif d'injection (32) du signal de calibration comporte, mis en série, un générateur numérique (39) d'un signal de calibration de référence numérique, un convertisseur numérique-analogique (40), et une deuxième chaine d'injection analogique (42) incluant un coupleur analogique (44) fonctionnant en sommateur de deux signaux analogiques ; et
le dispositif d'injection (32) est configuré pour injecter un ou plusieurs signaux de calibration d'une séquence temporelle couvrant la bande utile de fréquences sur laquelle la première chaîne (6) est à calibrer, et additionner le ou les signaux de calibration au troisième signal utile de trafic ; et
le dispositif d'effacement temporel (36) comporte le générateur numérique (39) du signal de calibration de référence numérique en partage avec le dispositif d'injection (32), un soustracteur numérique (38), et une troisième chaine numérique (80) de fourniture d'une réplique du signal de calibration de référence à soustraire, adaptée en termes d'une fréquence de transposition compatible de la fréquence de sortie de la chaine radiofréquence à calibrer et d'un retard compatible des temps de propagation du signal le long du chemin de propagation traversant successivement le dispositif d'injection (32), la première chaine radiofréquence (6) à calibrer et le filtre de compensation (66).

5. Système de calibration dynamique d'un circuit radiofréquence d'une charge utile de satellite selon la revendication 4, dans lequel,
le dispositif de compensation (34) de la réponse fréquentielle et temporelle de la première chaine radiofréquence (6) à calibrer, comporte un filtre de compensation (66) et un optimiseur adaptatif ou en bloc (68) des coefficients du filtre de compensation (66),
le filtre de compensation (66) étant disposé directement en aval de la première chaine radiofréquence (6) à calibrer et directement en amont du soustracteur numérique (38) du dispositif d'effacement temporel (36), et
l'optimiseur adaptatif (68) est configuré pour déterminer des commandes des coefficients du filtre de compensation (66) à partir de mesures d'un quatrième signal observé, prises directement en aval du soustracteur numérique (38), et à partir du signal de calibration de référence issu du générateur de référence (39).

6. Système de calibration dynamique d'un circuit radiofréquence d'une charge utile de satellite selon l'une quelconque des revendications 1 à 3, dans lequel,
la première chaine radiofréquence (6) à calibrer est une chaine analogique d'un récepteur de communication comportant un premier circuit de transposition abaisseur (12) de fréquences, un premier étage amont d'amplification (14) disposé en amont du premier circuit de transposition (12), un premier étage aval (16) d'amplification disposé en aval du premier circuit de transposition (12), et un premier convertisseur analogique-numérique (18) de sortie, connecté en sortie de la première chaine (6) à calibrer ; et
Le dispositif d'injection (132) du signal de calibration comporte, mis en série, le générateur numérique (39) d'un signal de calibration de référence numérique, le convertisseur numérique-analogique (40), et une deuxième chaine d'injection analogique (42) incluant un coupleur analogique (44) fonctionnant en sommateur de deux signaux analogiques ; et
le dispositif d'injection (132) est configuré pour injecter un ou plusieurs signaux de calibration d'une séquence temporelle couvrant la bande utile de fréquences sur laquelle la première chaîne (6) est calibrée, et additionner le ou les signaux de calibration au troisième signal utile de trafic ; et
le dispositif d'effacement temporel (136) comporte le générateur numérique (39) des signaux de calibration de référence numériques de la séquence temporelle en partage avec le dispositif d'injection (132), le soustracteur numérique (138), et une troisième chaine numérique (182) de fourniture des répliques des signaux de calibration de référence de la séquence à soustraire, adaptée en termes d'une fréquence de transposition compatible de la fréquence de sortie de la chaine radiofréquence à calibrer, de gains et de retards compatibles respectivement des gains et des temps de propagation des signaux de calibration le long du chemin de propagation traversant successivement le dispositif d'injection (132) et la première chaine radiofréquence (6) à calibrer.

7. Système de calibration dynamique d'un circuit radiofréquence d'une charge utile de satellite selon la revendication 6, dans lequel
La troisième chaine numérique (182) comporte :
- le contrôleur de calibration (168), configuré pour estimer paramètres caractéristiques des signaux de calibration de la séquence temporelle à partir du quatrième signal courant observé, et configuré pour déterminer des paramètres caractéristiques de répliques adaptées aux signaux de calibration de la séquence à partir des signaux de calibration de la séquence générés par le générateur (39) de signal de calibration de référence et des paramètres caractéristiques estimés ; et
- un générateur numérique (184) des répliques adaptées aux signaux de calibration observés et à soustraire.

8. Système de calibration dynamique d'un circuit radiofréquence d'une charge utile de satellite selon la revendication 6, dans lequel,
le dispositif de compensation (134) de la réponse fréquentielle et temporelle de la première chaine radiofréquence (6) à calibrer, comporte un filtre de compensation (166) et un circuit de contrôle (168) des coefficients du filtre de compensation (166),
le filtre de compensation (166) étant connecté directement en aval du soustracteur numérique (138), ledit soustracteur (138) étant disposé directement en aval de la première chaine radiofréquence (6) à calibrer ; et
le circuit de contrôle (168) étant configuré pour déterminer des commandes des coefficients du filtre de compensation (166) à partir de plusieurs mesures d'un quatrième signal observé prises directement en aval de la première chaine à calibrer (6) et à partir du signal de calibration de référence issu du générateur de référence (39).

9. Système de calibration dynamique d'un circuit radiofréquence d'une charge utile de satellite selon l'une quelconque des revendications 1 à 3, dans lequel,
la première chaine radiofréquence (206) à calibrer est une chaine analogique d'un émetteur de communication comportant un premier circuit de transposition (212) élévateur de fréquences, un premier étage amont d'amplification (214) disposé en amont du premier circuit de transposition, un premier étage aval d'amplification (216) disposé en aval du premier circuit de transposition (212), et un premier convertisseur numérique-analogique d'entrée (218), connecté en sortie du filtre de compensation (266);
le dispositif d'injection (232) du signal de calibration comporte, mis en série, un générateur numérique (240) d'un signal de calibration de référence numérique, et une deuxième chaine d'injection numérique (242) comportant un sommateur numérique (244) de deux signaux numériques ; et
le dispositif d'effacement temporel (236) comporte le générateur numérique (240) du signal de calibration de référence numérique en partage avec le dispositif d'injection (232), le soustracteur analogique (238), et une troisième chaine hybride numérique-analogique (300) de fourniture d'une réplique du signal de calibration de référence à soustraire, adaptée en termes d'une fréquence de transposition compatible de la fréquence de sortie de la première chaine radiofréquence à calibrer et d'un retard compatible des temps de propagation du signal le long du chemin de propagation traversant successivement le dispositif d'injection (232), le filtre de compensation (266) et la première chaine radiofréquence (206) à calibrer.

10. Système de calibration dynamique d'un circuit radiofréquence d'une charge utile de satellite selon la revendication 9, dans lequel
la troisième chaine hybride (300) comporte mise en série une troisième sous-chaine numérique (302) et une troisième sous-chaine analogique (304),
la troisième sous-chaine numérique (302) incluant en série : un circuit numérique (306) de reproduction d'un modèle de référence numérique d'une réponse temporelle et fréquentielle de la première chaîne radiofréquence (206) et du filtre de compensation (266) de la première chaine lorsque la compensation effectuée par le filtre de compensation (266) est optimale, et de correction des dispersions en amplitude et en phase causés par la troisième sous-chaine analogique (304), et un troisième convertisseur numérique-analogique (308); et
La troisième sous-chaine analogique (304) incluant un troisième circuit de transposition (312) élévateur de fréquences, un troisième étage amont d'amplification (314) disposé en amont du troisième circuit de transposition (312), un troisième étage aval d'amplification de puissance (316) disposé en aval du troisième circuit de transposition (312).

11. Système de calibration dynamique d'un circuit radiofréquence d'une charge utile de satellite selon la revendication 10, dans lequel,
le dispositif de compensation (234) de la réponse fréquentielle et temporelle de la première chaine radiofréquence (206) à calibrer, comporte un filtre de compensation numérique (266) et un optimiseur adaptatif ou en bloc (268) des coefficients du filtre de compensation numérique,
le filtre de compensation (266) étant disposé directement en amont de la première chaine radiofréquence (206) à calibrer, et directement en aval du sommateur numérique (244), et
l'optimiseur adaptatif (268) est configuré pour déterminer des commandes des coefficients du filtre de compensation (266) à partir de mesures d'un quatrième signal observé, prises directement en aval du soustracteur analogique (238) et à partir du signal de calibration de référence issu du générateur de référence (240).

12. Système de calibration dynamique d'un circuit radiofréquence d'une charge utile de satellite selon la revendication 11, dans lequel
le dispositif de compensation comporte en outre une quatrième chaine de mesure (270) d'acheminement de mesures du quatrième signal observé prises directement en aval du soustracteur analogique (238) à l'optimiseur adaptatif (268),
la quatrième chaine de mesure (270) incluant un quatrième circuit de transposition (286) abaisseur de fréquences, un quatrième étage amont d'amplification (288) disposé en amont du quatrième circuit de transposition abaisseur (286), un quatrième étage aval d'amplification (290) disposé en aval du quatrième circuit de transposition (286).

13. Procédé de calibration dynamique d'un circuit radiofréquence d'une charge utile de satellite,
le circuit radiofréquence (4 ; 204) comprenant une première chaine radiofréquence (6 ; 206) à calibrer d'amplification et de filtrage avec ou sans transposition à une fréquence de transposition prédéterminée d'un premier signal d'entrée formé par la somme temporelle d'un deuxième signal de calibration et d'un troisième signal utile d'entrée,
la première chaine radiofréquence (6 ; 206) à calibrer sur une bande utile de chaîne étant comprise entre en amont un premier port amont (8 ; 208) de réception du premier signal d'entrée et en aval un premier port aval (10 ; 210) de fourniture d'un premier signal de sortie, le premier signal de sortie étant la réponse fréquentielle et temporelle de la première chaine radiofréquence (6 ; 206) à calibrer au premier signal d'entrée **caractérisé en ce que**:
le procédé de calibration dynamique comprenant les étapes consistant **en ce que** :
- dans une première étape (564), un dispositif d'injection injecte le deuxième signal de calibration dont la forme d'onde est prédéterminée en amont de la première chaine radiofréquence (6 ; 206) à calibrer, le deuxième signal de calibration étant injecté directement sous forme numérique ou indirectement sous forme analogique au travers d'une deuxième chaine d'injection analogique à partir d'un signal de calibration de référence ; puis
- dans une deuxième étape (566), un dispositif de compensation compense, sur la bande utile de fréquences de la première chaîne à calibrer, des disparités en amplitude et en phase causées par la première chaine à calibrer, à l'aide d'un filtre de compensation, disposé en amont ou en aval de la première chaine radiofréquence à calibrer, la compensation étant réalisée à partir de mesures d'un quatrième signal, observé en aval de la première chaine radiofréquence à calibrer et du filtre de compensation, ou directement en aval de la première chaine à calibrer ; et
dans une troisième étape (568), exécutée après la première étape, un dispositif d'effacement temporel efface temporellement le signal de calibration injecté à l'aide d'un soustracteur analogique (238) ou numérique (38 ; 138), connecté en aval de la première chaîne à calibrer.
ledit dispositif d'effacement temporel (36; 136; 236) comporte également une troisième chaine numérique ou analogique (80 ; 182 ; 304) de fourniture d'une réplique du signal de calibration de référence à soustraire, adaptée en termes de fréquence de transposition compatible de la fréquence de sortie de la chaine radiofréquence (6 ; 206) à calibrer, de retard compatible des temps de propagation du signal au travers du dispositif d'injection (32 ; 132 ; 232) et de la première chaine radiofréquence (6 ; 206) à calibrer, ou au travers du dispositif d'injection, de la première chaine radiofréquence à calibrer et du filtre de compensation (66; 266) ; et pendant la troisième étape (568), ledit dispositif d'effacement temporel (36 ; 136 ; 236) soustrait de manière cohérente la réplique adaptée du signal de calibration de référence au signal de sortie de la première chaîne radiofréquence (6 ; 206) à calibrer.

14. Procédé de calibration dynamique d'un circuit radiofréquence d'une charge utile de satellite selon la revendication 13, dans lequel,
- la troisième étape (568) est exécutée après la deuxième étape (566), le soustracteur (238) est un soustracteur analogique, connecté directement en aval de la première chaîne (206) à calibrer, et le filtre de compensation (266) est un filtre de compensation numérique disposé en amont de la chaine radiofréquence (206) à calibrer, lorsque la première chaine (206) est la chaine d'un émetteur ; ou
- la troisième étape (568) est exécutée après la deuxième étape (566), le soustracteur (38) est un soustracteur numérique, connecté directement en aval du filtre de compensation (66), et le filtre de compensation (66) est un filtre de compensation numérique, disposé directement en aval de la première chaine (6) à calibrer, lorsque la première chaine (6) à calibrer est la chaine d'un récepteur ; ou
- la troisième étape (568) est exécutée avant la deuxième étape (566), le soustracteur (138) est un soustracteur numérique connecté directement entre en amont la première chaine (6) à calibrer et en aval le filtre de compensation (166), et le filtre de compensation (166) est un filtre de compensation numérique, disposé directement en aval du soustracteur numérique (138), lorsque la première chaine (6) à calibrer est la chaine d'un récepteur.

## Patentansprüche

1. System zur dynamischen Kalibrierung einer Hochfrequenzschaltung einer Satellitennutzlast,
wobei die Hochfrequenz-(HF)-Schaltung (4; 204) einen ersten zu kalibrierenden Verstärkungs- und Filterungs-Hochfrequenzkanal (6; 206) mit oder ohne Umsetzung auf eine vorbestimmte Umsetzungsfrequenz eines ersten Eingangssignals umfasst, das durch die zeitliche Summe eines zweiten Kalibriersignals und eines dritten Eingangsnutzsignals gebildet wird,
wobei der auf einem Nutzkanalband zu kalibrierende erste Hochfrequenzkanal (6; 206) zwischen einem ersten Upstream-Port (8; 208) stromaufwärts zum Empfangen des ersten Eingangssignals und einem ersten Downstream-Port (10; 210) stromabwärts zum Bereitstellen eines ersten Ausgangssignals liegt, wobei das erste Ausgangssignal die Frequenz- und Zeitantwort des auf das erste Eingangssignal zu kalibrierenden Hochfrequenzkanals (6; 206) ist;
**dadurch gekennzeichnet, dass**:
das dynamische Kalibriersystem Folgendes umfasst:
- eine Vorrichtung (32; 132; 232) zum Einspeisen des zweiten Kalibriersignals, dessen Wellenform stromaufwärts des ersten zu kalibrierenden Hochfrequenzkanals (6; 206) vorbestimmt ist, wobei das zweite Kalibriersignal (20) direkt in digitaler Form oder indirekt in analoger Form über einen zweiten analogen Einspeisekanal (42) auf der Basis eines Referenzkalibriersignals eingespeist wird und das Band des zweiten Kalibriersignals im Nutzband des ersten zu kalibrierenden Kanals enthalten ist; und
- eine Vorrichtung (34; 134; 234) zum Kompensieren der Frequenz- und Zeitantwort des ersten zu kalibrierenden Hochfrequenzkanals (6; 206), die ein Kompensationsfilter (66; 166; 266) auf dem Nutzfrequenzband des ersten zu kalibrierenden Kanals (6; 206) umfasst,
wobei das Kompensationsfilter (66; 166) dem ersten zu kalibrierenden Hochfrequenzkanal (6) nachgeschaltet ist, wenn das zweite Kalibriersignal indirekt in analoger Form eingespeist wird, oder
wobei das Kompensationsfilter (266) dem ersten zu kalibrierenden Hochfrequenzkanal (66; 206) vorgeschaltet ist, wenn das zweite Kalibriersignal direkt in digitaler Form eingespeist wird, und
wobei die Kompensation auf der Basis von Messungen eines vierten Signals realisiert wird, das stromabwärts des ersten zu kalibrierenden Hochfrequenzkanals (6) und des Kompensationsfilters (66) oder direkt stromabwärts des ersten zu kalibrierenden Kanals (6) beobachtet wird, wenn das zweite Kalibriersignal indirekt in analoger Form eingespeist wird, oder stromabwärts des ersten zu kalibrierenden Kanals (206), wenn das zweite Kalibriersignal direkt in digitaler Form eingespeist wird, und
wobei das dynamische Kalibriersystem ferner Folgendes umfasst:
eine Vorrichtung (36; 136; 236) zum zeitlichen Löschen des eingespeisten zweiten Kalibriersignals mit
einem digitalen Subtrahierer (38; 138), wenn das zweite Kalibriersignal indirekt in analoger Form eingespeist wird, wobei der digitale Subtrahierer dem ersten zu kalibrierenden Hochfrequenzkanal (6) und dem Kompensationsfilter (66) nachgeschaltet ist oder zwischen den ersten Hochfrequenzkanal (15) und das Kompensationsfilter (166) geschaltet ist, oder
einem analogen Subtrahierer (238), wenn das zweite Kalibriersignal direkt in digitaler Form eingespeist wird, wobei der analoge Subtrahierer zwischen den ersten zu kalibrierenden Hochfrequenzkanal (206) und die Kompensationsvorrichtung (234) geschaltet ist;
die zeitliche Löschvorrichtung (36; 136; 236) umfasst auch einen dritten digitalen oder analogen Kanal (80; 182; 304) zum Bereitstellen eines Replikats des zu subtrahierenden Referenzkalibriersignals, adaptiert in Bezug auf eine kompatible Umsetzungsfrequenz, die mit der Ausgangsfrequenz des zu kalibrierenden Hochfrequenzkanals (6; 206) kompatibel ist, eine Verzögerung, die mit den Ausbreitungszeiten des Signals durch die Einspeisevorrichtung (32; 132, 232) und den ersten zu kalibrierenden Hochfrequenzkanal (6, 206) kompatibel ist, oder durch die Einspeisevorrichtung, den ersten zu kalibrierenden Hochfrequenzkanal und das Kompensationsfilter (66; 266); und
die zeitliche Löschvorrichtung (36; 136; 236) ist zum kohärenten Subtrahieren des adaptierten Replikats des Referenzkalibriersignals auf das Ausgangssignal des zu kalibrierenden ersten Hochfrequenzkanals (6; 206) konfiguriert.

2. System zur dynamischen Kalibrierung einer Hochfrequenzschaltung einer Satellitennutzlast nach Anspruch 1,
das ferner einen ersten Generator für ein oder mehrere Lokaloszillator-(LO)-Signale (64; 322) umfasst, die bis auf eine Phasenverschiebung identisch und auf einem ersten Referenztakt synchronisiert sind; und wobei
wenn der erste zu kalibrierende Hochfrequenzkanal eine oder mehrere Frequenzumsetzungsschaltungen umfasst; und/oder
wenn der zweite Einspeisekanal analog ist und eine oder mehrere Frequenzumsetzungsschaltungen umfasst; und/oder
wenn der dritte Bereitstellungskanal des adaptierten Replikats analog ist und eine oder mehrere Frequenzumsetzungsschaltungen umfasst,
die erste(n) Umsetzungschaltung(en) und/oder die zweite(n) Umsetzungsschaltung(en) und/oder die dritte(n) Umsetzungsschaltung(en) zum Nutzen desselben Lokaloszillator-(LO)-Signals (64; 322) bis auf eine Phasenverschiebung und zum Realisieren der Frequenzhoch- oder -heruntersetzungen konfiguriert sind.

3. System zur dynamischen Kalibrierung einer Hochfrequenzschaltung einer Satellitennutzlast nach einem der Ansprüche 1 bis 2, wobei
wenn die Einspeisung des Kalibriersignals digital ist, die Vorrichtung (232) zum Einspeisen des Kalibriersignals einen digitalen Generator für ein digitales Referenzkalibriersignal (240) und einen digitalen Summierer (244) des digitalen Kalibriersignals, das sich auf ein digitales Verkehrssignal bezieht, umfasst, und
wenn die Einspeisung des Kalibriersignals analog ist, die Vorrichtung (32) zum Einspeisen des Kalibriersignals einen digitalen Generator (39) für ein digitales Referenzkalibriersignal, einen Analog/Digital-Wandler (40) und einen zweiten analogen Einspeisekanal mit einem analogen Koppler (44) umfasst, der als Summierer zweier analoger Signale dient,
die Vorrichtung (32; 132; 232) zum Einspeisen des Kalibriersignals zum dynamischen Justieren der Leistung des zweiten Kalibriersignals relativ zu der des dritten Nutzsignals auf den höchstmöglichen Pegel, der mit einer Abwesenheit von Sättigung eines Analog/Digital- oder Digital/Analog-Wandlers des ersten zu kalibrierenden Hochfrequenzkanals (6; 206) kompatibel ist, konfiguriert ist, der jeweils am Ausgang oder am Eingang des ersten Kanals (6; 206) angeordnet ist.

4. System zur dynamischen Kalibrierung einer Hochfrequenzschaltung einer Satellitennutzlast nach einem der Ansprüche 1 bis 3, wobei
der erste zu kalibrierende Hochfrequenzkanal (6) ein analoger Kanal eines Kommunikationsempfängers ist, der eine erste Frequenzherabsetzungsschaltung (12), eine der ersten Umsetzungsschaltung (12) vorgeschaltete erste Upstream-Verstärkungsstufe (14), eine der ersten Umsetzungsschaltung (12) nachgeschaltete erste Downstream-Verstärkungsstufe (16) und einen ersten Ausgangs-Analog/Digital-Wandler (18) umfasst, der am Ausgang des ersten zu kalibrierenden Kanals (6) angeschlossen ist; und
die Vorrichtung (32) zum Einspeisen des Kalibriersignals in Reihe geschaltet einen digitalen Generator (39) für ein digitales Referenzkalibriersignal, einen Digital/Analog-Wandler (40) und einen zweiten analogen Einspeisekanal (42) mit einem analogen Koppler (44) umfasst, der als Summierer zweier analoger Signale arbeitet; und
die Einspeisevorrichtung (32) zum Einspeisen eines oder mehrerer Kalibriersignale einer zeitlichen Sequenz, die das Nutzfrequenzband abdeckt, auf das der erste Kanal (6) kalibriert werden soll, und zum Hinzufügen der ein oder mehreren Kalibriersignale zum dritten Verkehrsnutzsignal konfiguriert ist; und
die zeitliche Löschvorrichtung (36) den digitalen Generator (39) für das digitale Referenzkalibriersignal, das mit der Einspeisevorrichtung (32) gemeinsam genutzt wird, einen digitalen Subtrahierer (38) und einen dritten digitalen Kanal (80) zum Bereitstellen eines Replikats des zu subtrahierenden Referenzkalibriersignals umfasst, adaptiert in Bezug auf eine Umsetzungsfrequenz, die mit der Ausgangsfrequenz des zu kalibrierenden Hochfrequenzkanals kompatibel ist, und auf eine Verzögerung, die mit den Ausbreitungszeiten des Signals entlang des Ausbreitungswegs, der nacheinander durch die Einspeisevorrichtung (32), den zu kalibrierenden ersten Hochfrequenzkanal (6) und das Kompensationsfilter (66) verläuft, kompatibel ist.

5. System zur dynamischen Kalibrierung einer Hochfrequenzschaltung einer Satellitennutzlast nach Anspruch 4, wobei
die Vorrichtung (34) zum Kompensieren der Frequenz- und Zeitantwort des ersten zu kalibrierenden Hochfrequenzkanals (6) ein Kompensationsfilter (66) und einen adaptiven oder Blockoptimierer (68) der Koeffizienten des Kompensationsfilters (66) umfasst,
das Kompensationsfilter (66) dem ersten zu kalibrierenden Hochfrequenzkanal (6) direkt nachgeschaltet und dem digitalen Subtrahierer (38) der zeitlichen Löschvorrichtung (36) direkt vorgeschaltet ist, und
der adaptive Optimierer (68) zum Bestimmen von Befehlen für die Koeffizienten des Kompensationsfilters (66) auf der Basis von Messungen eines vierten beobachteten Signals, das direkt stromabwärts des digitalen Subtrahierers (38) genommen wird, und auf der Basis des Referenzkalibriersignals vom Referenzgenerator (39) konfiguriert ist.

6. System zur dynamischen Kalibrierung einer Hochfrequenzschaltung einer Satellitennutzlast nach einem der Ansprüche 1 bis 3, wobei
der erste zu kalibrierende Hochfrequenzkanal (6) ein analoger Kanal eines Kommunikationsempfängers ist, der eine erste Frequenzherabsetzungsschaltung (12), eine der ersten Umsetzungsschaltung (12) vorgeschaltete erste Upstream-Verstärkungsstufe (14), eine der ersten Umsetzungsschaltung (12) nachgeschaltete erste Downstream-Verstärkungsstufe (16) und einen am Ausgang des ersten zu kalibrierenden Kanals (6) angeschlossenen ersten Ausgangs-Analog/Digital-Wandler (18) umfasst; und
die Vorrichtung (132) zum Einspeisen des Kalibriersignals in Reihe geschaltet den digitalen Generator (39) für ein digitales Referenzkalibriersignal, den Digital/AnalogWandler (40) und einen zweiten analogen Einspeisekanal (42) mit einem analogen Koppler (44) umfasst, der als Summierer zweier analoger Signale arbeitet; und
die Einspeisevorrichtung (132) zum Einspeisen eines oder mehrerer Kalibriersignale einer zeitlichen Sequenz, die das Nutzfrequenzband abdeckt, auf das der erste Kanal (6) kalibriert wird, und zum Hinzufügen der ein oder mehreren Kalibriersignale zu dem dritten Nutzverkehrssignal konfiguriert ist; und
die zeitliche Löschvorrichtung (136) den digitalen Generator (39) für digitale Referenzkalibriersignale der mit der Einspeisevorrichtung (132) gemeinsam genutzten zeitlichen Sequenz, den digitalen Subtrahierer (138) und einen dritten digitalen Kanal (182) zum Bereitstellen von Replikaten der Referenzkalibriersignale der zu subtrahierenden Sequenz umfasst, adaptiert in Bezug auf eine Umsetzungsfrequenz, die mit der Ausgangsfrequenz des zu kalibrierenden Hochfrequenzkanals kompatibel ist, auf Verstärkungen bzw. Verzögerungen, die mit den Verstärkungen und Ausbreitungszeiten der Kalibriersignale entlang des Ausbreitungswegs, der nacheinander durch die Einspeisevorrichtung (132) und den ersten zu kalibrierenden Hochfrequenzkanal (6) verläuft, kompatibel sind.

7. System zur dynamischen Kalibrierung einer Hochfrequenzschaltung einer Satellitennutzlast nach Anspruch 6, wobei
der dritte Hochfrequenzkanal (182) Folgendes umfasst:
- die Kalibrationssteuerung (168), konfiguriert zum Schätzen charakteristischer Parameter von Kalibriersignalen der zeitlichen Sequenz ab dem beobachteten vierten aktuellen Signal, und konfiguriert zum Bestimmen charakteristischer Parameter von Replikaten, adaptiert an die Kalibriersignale der Sequenz auf der Basis von Kalibriersignalen der Sequenz, erzeugt durch den Referenzkalibriersignalgenerator (39) und von geschätzten charakteristischen Parametern; und
- einen digitalen Generator (184) für Replikate, die an die beobachteten und zu subtrahierenden Kalibriersignale adaptiert sind.

8. System zur dynamischen Kalibrierung einer Hochfrequenzschaltung einer Satellitennutzlast nach Anspruch 6, wobei
die Vorrichtung (134) zur Kompensation der Frequenz- und Zeitantwort des ersten zu kalibrierenden Hochfrequenzkanals (6) ein Kompensationsfilter (166) und eine Schaltung (168) zur Steuerung der Koeffizienten des Kompensationsfilters (166) umfasst,
das Kompensationsfilter (166) dem digitalen Subtrahierer (138) direkt nachgeschaltet ist, wobei der Subtrahierer (138) dem ersten zu kalibrierenden Hochfrequenzkanal (6) direkt nachgeschaltet ist; und
wobei die Steuerschaltung (168) zum Bestimmen von Befehlen für Koeffizienten des Kompensationsfilters (166) auf der Basis von mehreren Messungen eines beobachteten vierten Signals, das direkt stromabwärts des ersten zu kalibrierenden Kanals (6) genommen wurde, und auf der Basis des Referenzkalibriersignals vom Referenzgenerator (39) konfiguriert ist.

9. System zur dynamischen Kalibrierung einer Hochfrequenzschaltung einer Satellitennutzlast nach einem der Ansprüche 1 bis 3, wobei
der erste zu kalibrierende Hochfrequenzkanal (206) ein analoger Kanal eines Kommunikationssenders ist, der eine erste Frequenzhochsetzungsschaltung (212), eine der ersten Umsetzungsschaltung vorgeschaltete erste Upstream-Verstärkungsstufe (214), eine der ersten Umsetzungsschaltung (212) nachgeschaltete erste Downstream-Verstärkungsstufe (216) und einen am Ausgang des Kompensationsfilters (266) angeschlossenen ersten Eingangs-Digital/Analog-Wandler (218) umfasst;
die Vorrichtung (232) zum Einspeisen des Kalibriersignals in Reihe geschaltet einen digitalen Generator (240) für ein digitales Referenzkalibriersignal und einen zweiten digitalen Einspeisekanal (242) mit einem digitalen Summierer (244) zweier digitaler Signale umfasst; und
die zeitliche Löschvorrichtung (236) den digitalen Generator (240) für das mit der Einspeisevorrichtung (232) gemeinsam genutzte digitale Referenzkalibriersignal, den analogen Subtrahierer (238) und einen dritten hybriden Digital/Analog-Kanal (300) zum Bereitstellen eines Replikats des zu subtrahierenden Referenzkalibriersignals umfasst, adaptiert in Bezug auf eine Umsetzungsfrequenz, die mit der Ausgangsfrequenz des ersten zu kalibrierenden Hochfrequenzkanals kompatibel ist, und eine Verzögerung, die mit den Ausbreitungszeiten des Signals entlang des Ausbreitungswegs, der nacheinander durch die Einspeisevorrichtung (232), das Kompensationsfilter (266) und den ersten zu kalibrierenden Hochfrequenzkanal (206) verläuft, kompatibel ist.

10. System zur dynamischen Kalibrierung einer Hochfrequenzschaltung einer Satellitennutzlast nach Anspruch 9, wobei
der dritte Hybridkanal (300) in Reihe geschaltet einen dritten digitalen Subkanal (302) und einen dritten analogen Subkanal (304) umfasst,
der dritte digitale Subkanal (302) in Reihe geschaltet eine digitale Schaltung (306) zum Reproduzieren eines digitalen Referenzmodells einer Zeit- und Frequenzantwort des ersten Hochfrequenzkanals (206) und des Kompensationsfilters (266) des ersten Kanals, wenn die durch das Kompensationsfilter (266) durchgeführte Kompensation optimal ist, und zum Korrigieren von durch den dritten analogen Subkanal (304) verursachten Amplituden- und Phasenverteilungen, und einen dritten Digital/Analog-Wandler (308) beinhaltet; und
wobei der dritte analoge Subkanal (304) eine dritte Frequenzhochsetzungsschaltung (312), eine der dritten Umsetzungsschaltung (312) vorgeschaltete dritte Upstream-Verstärkungsstufe (314) und eine der dritten Umsetzungschaltung (312) nachgeschaltete dritte Downstream-Leistungsverstärkungsstufe (316) umfasst.

11. System zur dynamischen Kalibrierung einer Hochfrequenzschaltung einer Satellitennutzlast nach Anspruch 10, wobei
die Vorrichtung (234) zur Kompensation der Frequenz- und Zeitantwort des ersten zu kalibrierenden Hochfrequenzkanals (206) ein digitales Kompensationsfilter (266) und einen adaptiven oder Blockoptimierer (268) für Koeffizienten des digitalen Kompensationsfilters umfasst,
wobei das Kompensationsfilter (266) dem ersten zu kalibrierenden Hochfrequenzkanal (206) direkt vorgeschaltet und dem digitalen Summierer (244) direkt nachgeschaltet ist, und
der adaptive Optimierer (268) zum Bestimmen von Befehlen für Koeffizienten des Kompensationsfilters (266) auf der Basis von Messungen eines vierten beobachteten Signals, das direkt stromabwärts des analogen Subtrahierers (238) genommen wird, und auf der Basis des Referenzkalibriersignals vom Referenzgenerator (240) konfiguriert ist.

12. System zur dynamischen Kalibrierung einer Hochfrequenzschaltung einer Satellitennutzlast nach Anspruch 11, wobei
die Kompensationsvorrichtung ferner einen vierten Messkanal (270) zum Leiten von Messwerten des vierten beobachteten Signals, die direkt stromabwärts des analogen Subtrahierers (238) genommen werden, zum adaptiven Optimierer (268) umfasst,
der vierte Messkanal (270) eine vierte Frequenzherabsetzungsschaltung (286), eine der vierten Herabsetzungsschaltung (286) vorgeschaltete vierte Upstream-Verstärkungsstufe (286) und eine der vierten Umsetzungsschaltung (286) nachgeschaltete vierte Downstream-Verstärkungsstufe (288) beinhaltet.

13. Verfahren zur dynamischen Kalibrierung einer Hochfrequenzschaltung einer Satellitennutzlast, wobei
die Hochfrequenzschaltung (4; 204) einen ersten zu kalibrierenden Verstärkungs- und Filterungs-Hochfrequenzkanal (6; 206) mit oder ohne Umsetzung auf eine vorbestimmte Umsetzungsfrequenz eines ersten Eingangssignals umfasst, das durch die zeitliche Summe eines zweiten Kalibriersignals und eines dritten Nutzeingangssignals gebildet wird,
der auf ein Nutzkanalband zu kalibrierende erste Hochfrequenzkanal (6; 206) zwischen einem vorgeschalteten ersten Upstream-Port (8; 208) zum Empfangen des ersten Eingangssignals und einem nachgeschalteten ersten Downstream-Port (10; 210) zum Bereitstellen eines ersten Ausgangssignals liegt, wobei das erste Ausgangssignal die Frequenz- und Zeitantwort des auf das erste Eingangssignal zu kalibrierenden ersten Hochfrequenzkanals (6; 206) ist, **dadurch gekennzeichnet, dass**:
das dynamische Kalibrierverfahren die folgenden Schritte beinhaltet:
- in einem ersten Schritt (564) speist eine Einspeisevorrichtung das zweite Kalibriersignal, dessen Wellenform vorbestimmt ist, stromaufwärts des ersten zu kalibrierenden Hochfrequenzkanals (6; 206) ein, wobei das zweite Kalibriersignal direkt in digitaler Form oder indirekt in analoger Form über einen zweiten analogen Einspeisekanal auf der Basis eines Referenzkalibriersignals eingespeist wird; dann
- in einem zweiten Schritt (566) kompensiert eine Kompensationsvorrichtung die durch den ersten zu kalibrierenden Kanal verursachten Amplituden- und Phasendisparitäten im Nutzfrequenzband des ersten zu kalibrierenden Kanals mit Hilfe eines Kompensationsfilters, das dem ersten zu kalibrierenden Hochfrequenzkanal vor- oder nachgeschaltet ist, wobei die Kompensation auf der Basis von Messungen eines vierten Signals, das stromabwärts des ersten zu kalibrierenden Hochfrequenzkanals und des Kompensationsfilters beobachtet wird, oder direkt stromabwärts des ersten zu kalibrierenden Kanals durchgeführt wird; und
in einem dritten Schritt (568), der nach dem ersten Schritt durchgeführt wird, löscht eine zeitliche Löschvorrichtung zeitlich das mittels eines dem ersten zu kalibrierenden Kanal nachgeschalteten analogen (238) oder digitalen (38; 138) Subtrahierers eingespeiste Kalibriersignal;
wobei die zeitliche Löschvorrichtung (36; 136; 236) auch einen dritten digitalen oder analogen Kanal (80; 182; 304) zum Bereitstellen eines Replikats des zu subtrahierenden Referenzkalibriersignals umfasst, adaptiert in Bezug auf eine Umsetzungsfrequenz, die mit der Ausgangsfrequenz des zu kalibrierenden Hochfrequenzkanals (6; 206) kompatibel ist, und auf eine Verzögerung, die mit den Ausbreitungszeiten des Signals durch die Einspeisevorrichtung (32; 132; 232) und den ersten zu kalibrierenden Hochfrequenzkanal (6; 206) oder durch die Einspeisevorrichtung, des ersten zu kalibrierenden Hochfrequenzkanals und des Kompensationsfilters (66; 266), kompatibel ist; und
während des dritten Schritts (568) subtrahiert die zeitliche Löschvorrichtung (36; 136; 236) auf kohärente Weise das adaptierte Replikat des Referenzkalibriersignals vom Ausgangssignal des ersten zu kalibrierenden Hochfrequenzkanals (6; 206).

14. Verfahren zur dynamischen Kalibrierung einer Hochfrequenzschaltung einer Satellitennutzlast nach Anspruch 13, wobei
- der dritte Schritt (568) nach dem zweiten Schritt (566) ausgeführt wird, der Subtrahierer (238) ein analoger Subtrahierer ist, der dem ersten zu kalibrierenden Kanal (206) direkt nachgeschaltet ist, und das Kompensationsfilter (266) ein digitales Kompensationsfilter ist, das dem zu kalibrierenden Hochfrequenzkanal (206) vorgeschaltet ist, wenn der erste Kanal (206) der Kanal eines Senders ist; oder
- der dritte Schritt (568) nach dem zweiten Schritt (566) ausgeführt wird, der Subtrahierer (38) ein digitaler Subtrahierer ist, der dem Kompensationsfilter (66) direkt nachgeschaltet ist, und das Kompensationsfilter (66) ein digitales Kompensationsfilter ist, das dem ersten zu kalibrierenden Kanal (6) direkt nachgeschaltet ist, wenn der erste zu kalibrierende Kanal (6) der Kanal eines Empfängers ist; oder
- der dritte Schritt (568) vor dem zweiten Schritt (566) ausgeführt wird, der Subtrahierer (138) ein digitaler Subtrahierer ist, der direkt zwischen dem ersten zu kalibrierenden Kanal (6) stromaufwärts und dem Kompensationsfilter (166) stromabwärts geschaltet ist, und das Kompensationsfilter (166) ein digitales Kompensationsfilter ist, das dem digitalen Subtrahierer (138) direkt nachgeschaltet ist, wenn der erste zu kalibrierende Kanal (6) der Kanal eines Empfängers ist.

## Claims

1. Dynamic calibration system for a radiofrequency circuit of a satellite payload,
the radiofrequency circuit RF (4; 204) comprising a first radiofrequency channel (6; 206) to be calibrated in terms of amplification and filtering with or without transposition to a predetermined transposition frequency of a first input signal formed by the temporal sum of a second calibration signal and a third useful input signal,
the first radiofrequency channel (6; 206) to be calibrated on a channel bandwidth being between at the upstream end a first upstream port (8; 208) for receiving the first input signal and at the downstream end a first downstream port (10; 210) for providing a first output signal, the first output signal being the frequency and time response of the radiofrequency channel (6; 206) to be calibrated to the first input signal;
**characterised in that**:
the dynamic calibration system comprises:
- an injection device (32; 132; 232) of the second calibration signal whose wave form is predetermined upstream of the first radiofrequency channel (6; 206) to be calibrated, the second calibration signal being injected directly in digital form or indirectly in analogue form via a second analogue injection channel (42) from a reference calibration signal, and the band of the second calibration signal being included in the bandwidth of the first channel to be calibrated; and
- a compensation device (34; 134; 234) of the frequency and time response of the first radiofrequency channel (6; 206) to be calibrated, comprising a compensation filter (66; 166; 266) on the frequency bandwidth of the first channel (6; 206) to be calibrated,
the compensation filter (66; 166) being arranged downstream of the first radiofrequency channel (6) to be calibrated when the second calibration signal is injected directly in analogue form, or
the compensation filter (266) being arranged upstream of the first radiofrequency channel (66; 206) to be calibrated when the second calibration signal is injected directly in digital form, and
the compensation being carried out from measurements of a fourth signal, observed downstream of the first radiofrequency channel (6) to be calibrated and the compensation filter (66) or directly downstream of the first channel (6) to be calibrated when the second calibration signal is injected indirectly in analogue form, or downstream of the first channel (206) to be calibrated when the second calibration signal is injected directly in digital form, and
the dynamic calibration system further comprising
a time deletion device (36; 136; 236) of the second injected calibration signal, having
a digital subtractor (38; 138) when the second calibration signal is injected indirectly in analogue form, the digital subtractor being connected downstream of the first radiofrequency channel (6) to be calibrated and the compensation filter (66) or between the first radiofrequency channel and the compensation filter (166), or
an analogue subtractor (238) when the second calibration signal is injected directly in digital form, the analogue subtractor being connected between the first radiofrequency channel (206) to be calibrated and the compensation device (234);
the time deletion device (36; 136; 236) also comprises a third digital or analogue channel (80; 182; 304) for providing a reply of the reference calibration signal to be subtracted, which reply is adapted in terms of compatible transposition frequency of the output frequency of the radiofrequency channel (6; 206) to be calibrated, in terms of delay compatible with the propagation times of the signal via the injection device (32; 132; 232) and the first radiofrequency channel (6; 206) to be calibrated, or via the injection device, the first radiofrequency channel to be calibrated and the compensation filter (66; 266); and
the time deletion device (36; 136; 236) is configured to subtract in a coherent manner the adapted reply of the reference calibration signal from the output signal of the first radiofrequency channel (6; 206) to be calibrated.

2. Dynamic calibration system for a radiofrequency circuit of a satellite payload according to claim 1,
further comprising a first generator of one or more local oscillator signals OL (64; 322) which are identical to within a phase shift and which are synchronised to a first reference clock; and in which.
when the first radiofrequency channel to be calibrated comprises one or more frequency transposition circuits; and/or
when the second injection channel is analogue and comprises one or more frequency transposition circuits; and/or
when the third channel for providing the adapted reply is analogue and comprises one or more frequency transposition circuits,
the first transposition circuit(s) and/or the second transposition circuit(s) and/or the third transposition circuit(s) are configured to use the same local oscillator signal OL (64; 122) to within one phase shift and to carry out the ascending or descending frequency transpositions.

3. Dynamic calibration system for a radiofrequency circuit of a satellite payload according to either claim 1 or claim 2, wherein,
when the injection of the calibration signal is digital, the injection device (232) of the calibration signal comprises a digital generator of a digital reference calibration signal (24) and a digital summer (244) of the calibration signal referring to a digital traffic signal, and,
when the injection of the calibration signal is analogue, the injection device (32; 132) of the calibration signal comprises a digital generator (39) of a digital reference calibration signal, a digital/analogue converter (40), and a second analogue injection channel which includes an analogue coupler (44) which acts as a summer for two analogue signals, and
the injection device (32; 132; 232) of the calibration signal is configured to adjust the power of the second calibration signal dynamically relative to that of the third useful signal to the highest possible level which is compatible with an absence of saturation of an analogue/digital converter or digital/analogue converter of the first radiofrequency channel (6; 206) to be calibrated, which is arranged at the output or at the input of the first channel (6; 206), respectively.

4. Dynamic calibration system for a radiofrequency circuit of a satellite payload according to any one of claims 1 to 3, wherein
the first radiofrequency channel (6) to be calibrated is an analogue channel for a communication receiver which comprises a first frequency decreasing transposition circuit (12), a first upstream amplification stage (14) which is arranged upstream of the first transposition circuit (12), a first downstream amplification stage (16) which is arranged downstream of the first transposition circuit (12), and a first analogue/digital output converter (18) which is connected at the output of the first channel (6) to be calibrated; and
the injection device (32) of the calibration signal comprises, in series, a digital generator (39) of a digital reference calibration signal, a digital/analogue converter (40), and a second analogue injection channel (42) which includes an analogue coupler (44) which acts as a summer for two analogue signals; and
the injection device (32) is configured to inject one or more calibration signals of a time sequence which covers the frequency bandwidth on which the first channel (6) is intended to be calibrated, and to add the calibration signal(s) to the third useful traffic signal; and
the time deletion device (36) comprises the digital generator (39) of the digital reference calibration signal shared with the injection device (32), a digital subtractor (38), and a third digital channel (80) for providing a reply of the reference calibration signal to be subtracted, which reply is adapted in terms of a transposition frequency which is compatible with the output frequency of the radiofrequency channel to be calibrated and a delay which is compatible with the propagation times of the signal along the propagation path which passes successively through the injection device (32), the first radiofrequency channel (6) to be calibrated and the compensation filter (66).

5. Dynamic calibration system for a radiofrequency circuit of a satellite payload according to claim 4, wherein
the compensation device (34) of the frequency and time response of the first radiofrequency channel (6) to be calibrated comprises a compensation filter (66) and an adaptive or block optimiser (68) of the coefficients of the compensation filter (66),
the compensation filter (66) being arranged directly downstream of the first radiofrequency channel (6) to be calibrated and directly upstream of the digital subtractor (38) of the time deletion device (36), and
the adaptive optimiser (68) is configured to determine commands of the coefficients of the compensation filter (66) from measurements of a fourth signal observed, which are taken directly downstream of the digital subtractor (38), and from the reference calibration signal originating from the reference generator (39).

6. Dynamic calibration system for a radiofrequency circuit of a satellite payload according to any one of claims 1 to 3, wherein
the first radiofrequency channel (6) to be calibrated is a digital channel of a communication receiver which comprises a first frequency decreasing transposition circuit (12), a first upstream amplification stage (14) which is arranged upstream of the first transposition circuit (12), a first downstream amplification stage (16) which is arranged downstream of the first transposition circuit (12), and a first analogue/digital output converter (18) which is connected to the output of the first channel (6) to be calibrated; and
the injection device (132) of the calibration signal comprises, in series, the digital generator (39) of a digital reference calibration signal, the digital/analogue converter (40), and a second analogue injection channel (42) which includes an analogue coupler (44) which acts as a summer for two analogue signals; and
the injection device (132) is configured to inject one or more calibration signals of a time sequence which covers the frequency bandwidth on which the first channel (6) is calibrated, and to add the calibration signal(s) to the third useful traffic signal; and
the time deletion device (136) comprises the digital generator (39) of the digital reference calibration signals of the time sequence shared with the injection device (132), the digital subtractor (138), and a third digital channel (182) for providing replies of the reference calibration signals of the sequence to be subtracted, which is adapted in terms of a transposition frequency which is compatible with the output frequency of the radiofrequency channel to be calibrated, gains and delays which are compatible with the gains and the propagation times of the calibration signals along the propagation path which passes successively through the injection device (132) and the first radiofrequency channel (6) to be calibrated, respectively.

7. Dynamic calibration system for a radiofrequency circuit of a satellite payload according to claim 6, wherein
the third digital channel (182) comprises:
- the calibration controller (168) which is configured to estimate parameters which are characteristic of the calibration signals of the time sequence from the current fourth signal observed, and which is configured to determine the parameters which are characteristic of replies which are adapted to the calibration signals of the sequence from the calibration signals of the sequence generated by the reference calibration signal generator (39) and the estimated characteristic parameters; and
- a digital generator (184) for the replies which are adapted to the calibration signals which have been observed and which are intended to be subtracted.

8. Dynamic calibration system for a radiofrequency circuit of a satellite payload according to claim 6, wherein
the compensation device (134) of the frequency and time response of the first radiofrequency channel (6) to be calibrated comprises a compensation filter (166) and a control circuit (168) for the coefficients of the compensation filter (166),
the compensation filter (166) being connected directly downstream of the digital subtractor (138), the subtractor (138) being arranged directly downstream of the first radiofrequency channel (6) to be calibrated; and
the control circuit (168) being configured to determine commands of the coefficients of the compensation filter (166) from a plurality of measurements of a fourth signal observed taken directly downstream of the first channel (6) to be calibrated and from the reference calibration signal originating from the reference generator (39).

9. Dynamic calibration system for a radiofrequency circuit of a satellite payload according to any one of claims 1 to 3, wherein
the first radiofrequency channel (206) to be calibrated is an analogue channel of a communication transmitter which comprises a first frequency increasing transposition circuit (212), a first upstream amplification stage (214) arranged upstream of the first transposition circuit, a first downstream amplification stage (216) arranged downstream of the first transposition circuit (212), and a first digital/analogue input converter (218) which is connected to the output of the compensation filter (266);
the injection device (232) of the calibration signal comprises, in series, a digital generator (240) of a digital reference calibration signal, and a second digital injection channel (242) comprising a digital summer (244) for two digital signals; and
the time deletion device (236) comprises the digital generator (240) of the digital reference calibration signal shared with the injection device (232), the analogue subtractor (238), and a third hybrid digital/analogue channel (300) for providing a reply of the reference calibration signal to be subtracted, which reply is adapted in terms of a transposition frequency which is compatible with the output frequency of the first radiofrequency channel to be calibrated, and a delay which is compatible with the propagation times of the signal along the propagation path which passes successively through the injection device (232), the compensation filter (266) and the first radiofrequency channel (206) to be calibrated.

10. Dynamic calibration system for a radiofrequency circuit of a satellite payload according to claim 9, wherein
the third hybrid channel (300) comprises, in series, a third digital sub-channel (302) and a third analogue sub-channel (304),
the third digital sub-channel (302) including in series: a digital circuit (306) for reproducing a digital reference model of a time and frequency response of the first radiofrequency channel (206) and the compensation filter (266) of the first channel when the compensation carried out by the compensation filter (266) is optimum, and for correcting phase and amplitude dispersions caused by the third analogue sub-channel (304), and a third digital/analogue converter (308); and
the third analogue sub-channel (304) including a third frequency increasing transposition circuit (312), a third upstream amplification stage (314) which is arranged upstream of the third transposition circuit (312), a third downstream power amplification stage (316) which is arranged downstream of the third transposition circuit (312).

11. Dynamic calibration system for a radiofrequency circuit of a satellite payload according to claim 10, wherein
the compensation device (234) of the frequency and time response of the first radiofrequency channel (206) to be calibrated comprises a digital compensation filter (266) and an adaptive or block optimiser (268) for the coefficients of the digital compensation filter,
the compensation filter (266) being arranged directly upstream of the first radiofrequency channel (206) which is intended to be calibrated, and directly downstream of the digital summer (244), and
the adaptive optimiser (268) is configured to determine commands of the coefficients of the compensation filter (266) from measurements of a fourth signal observed, taken directly downstream of the analogue subtractor (238) and from the reference calibration signal originating from the reference generator (240).

12. Dynamic calibration system for a radiofrequency circuit of a satellite payload according to claim 11, wherein
the compensation device further comprises a fourth channel (270) for routing the measurements of the fourth signal observed which are taken directly downstream of the analogue subtractor (238) to the adaptive optimiser (268),
the fourth measurement channel (270) including a fourth frequency decreasing transposition circuit (286), a fourth upstream amplification stage (288) which is arranged upstream of the fourth frequency decreasing transposition circuit (286), a fourth downstream amplification stage (290) which is arranged downstream of the fourth transposition circuit (286).

13. Method for dynamic calibration of a radiofrequency circuit of a satellite payload,
the radiofrequency circuit (4; 204) comprising a first radiofrequency channel (6; 206) to be calibrated in terms of amplification and filtering with or without transposition to a predetermined transposition frequency of a first input signal formed by the temporal sum of a second calibration signal and a third useful input signal,
the first radiofrequency channel (6; 206) to be calibrated on a channel bandwidth being between at the upstream end a first upstream port (8; 208) for receiving the first input signal and at the downstream end a first downstream port (10; 210) for providing a first output signal, the first output signal being the frequency and time response of the first radiofrequency channel (6; 206) which is intended to be calibrated to the first input signal, **characterised in that**:
the dynamic calibration method comprising the steps involving:
- in a first step (564), an injection device injects the second calibration signal whose wave form is predetermined upstream of the first radiofrequency channel (6; 206) to be calibrated, the second calibration signal being injected directly in digital form or indirectly in analogue form via a second analogue injection channel from a reference calibration signal; then.
- in a second step (566), a compensation device compensates, on the frequency bandwidth of the first channel to be calibrated, for the phase and amplitude disparities caused by the first channel to be calibrated, using a compensation filter, which is arranged upstream or downstream of the first radiofrequency channel to be calibrated, the compensation being carried out from measurements of a fourth signal observed downstream of the first radiofrequency channel to be calibrated and the compensation filter, or directly downstream of the first channel to be calibrated; and,
in a third step (568), carried out after the first step, a time deletion device temporarily deletes the calibration signal injected using an analogue subtractor (238) or digital subtractor (38; 138) which is connected downstream of the first channel to be calibrated,
the time deletion device (36; 136; 236) also comprises a third digital or analogue channel (80; 182; 304) for providing a reply of the reference calibration signal to be subtracted, which reply is adapted in terms of transposition frequency which is compatible with the output frequency of the radiofrequency channel (6; 206) to be calibrated, with a delay which is compatible with the propagation times of the signal via the injection device (32; 132; 232) and the first radiofrequency channel (6; 206) to be calibrated, or via the injection device, of the first radiofrequency channel to be calibrated and the compensation filter (66; 266); and,
during the third step (568), the time deletion device (36; 136; 236) subtracts in a coherent manner the adapted reply of the reference calibration signal from the output signal of the first radiofrequency channel (6; 206) to be calibrated.

14. Method for dynamic calibration of a radiofrequency circuit of a satellite payload according to claim 13, wherein
- the third step (568) is carried out after the second step (566), the subtractor (238) is an analogue subtracter, connected directly downstream of the first channel (206) to be calibrated, and the compensation filter (266) is a digital compensation filter which is arranged upstream of the radiofrequency channel (206) to be calibrated, when the first channel (206) is the channel of a transmitter; or
- the third step (568) is carried out after the second step (566), the subtractor (38) is a digital subtractor connected directly downstream of the compensation filter (66) and the compensation filter (66) is a digital compensation filter, arranged directly downstream of the first channel (6) to be calibrated, when the first channel (6) to be calibrated is the channel of a receiver; or
- the third step (568) is carried out before the second step (566), the subtractor (138) is a digital subtractor which is connected directly between at an upstream end the first channel (6) to be calibrated and at a downstream end the compensation filter (166), and the compensation filter (166) is a digital compensation filter, arranged directly downstream of the digital subtractor (138), when the first channel (6) to be calibrated is the channel of a receiver.
